# EUROPÄISCHE PATENTSCHRIFT

(11) **EP 4 463 925 B1**
(45) Veröffentlichungstag und Bekanntmachung des Hinweises auf die Patenterteilung: **04.11.2026**
(21) Anmeldenummer: 22835763.8
(22) Anmeldetag: 14.12.2022
(51) Int. Cl.: H02J 7/00, H01M 10/44

(54) **VORRICHTUNG ZUM (TIEF-) ENTLADEN VON (FAHRZEUG-) BATTERIEEINHEITEN**
DEVICE FOR THE (DEEP) DISCHARGING OF (VEHICLE) BATTERY UNITS
DISPOSITIF DE DÉCHARGE (PROFONDE) D'UNITÉS DE BATTERIE (DE VÉHICULE)

(30) Priorität: 12.01.2022 DE 102022200245; 28.04.2022 DE 102022204121
(43) Veröffentlichungstag der Anmeldung: 20.11.2024
(73) Patentinhaber: Robert Bosch GmbH, 70442 Stuttgart (DE)
(72) Erfinder: KRIEGER, Sebastian, 89073 Ulm (DE); HERRMANN, Karl-Guenter, 97753 Karlstadt (DE); KEMPF, Karl, 63839 Kleinwallstadt (DE); MEYER, Christine, 76149 Karlsruhe (DE); FISCHER, Jan, 71642 Ludwigsburg (DE); KELLER, Roland, 97241 Bergtheim (DE)
(86) Internationale Anmeldenummer: PCT/EP2022/085766
(87) Internationale Veröffentlichungsnummer: WO 2023/134946

(56) Entgegenhaltungen:
- CN-A- 110 729 521
- JP-A- 2019 033 029
- JP-A- 2019 071 701
- KR-B1- 102 308 374
- MUKHERJEE NILANJAN ET AL: "Control of Second-Life Hybrid Battery Energy Storage System Based on Modular Boost-Multilevel Buck Converter", IEEE TRANSACTIONS ON INDUSTRIAL ELECTRONICS, IEEE SERVICE CENTER, PISCATAWAY, NJ, USA, vol. 62, no. 2, 1 February 2015 (2015-02-01), pages 1034 - 1046, XP011569230, ISSN: 0278-0046, [retrieved on 20150107], DOI: 10.1109/TIE.2014.2341598

## Beschreibung

Die vorliegende Erfindung betrifft eine Vorrichtung und ein Verfahren zum Entladen von Batterieeinheiten.

### Hintergrund der Erfindung

Akkumulatoren bzw. Batterien in (Kraft- bzw. Elektro-) Fahrzeugen oder in der elektrischen Antriebstechnik können nach ihrem Einsatz am Ende ihrer Lebensdauer einem Recyclingprozesse zugeführt werden. Ferner können auch Batterien, die am Ende ihres Fertigungsprozesses als nicht in Ordnung gekennzeichnet wurden und für ihren vorgesehenen Einsatzzweck nicht freigegeben werden können, einem Recycling unterzogen werden. Vor dem Recyceln derartiger Batterien ist es sinnvoll, diese zunächst möglichst vollständig zu entladen, um die Restenergie der Batterien noch nutzen zu können.

MUKHERJEE NILANJAN ET AL: "Control of Second-Life Hybrid Battery Energy Storage System Based on Modular Boost-Multilevel Buck Converter", IEEE TRANSACTIONS ON INDUSTRIAL ELECTRONICS, IEE SERVICE CENTER, PISCATAWAY, NJ, USA, Bd. 62, Nr. 2, 1. Februar 2025 (2015-02-01), Seiten 1034-1046, XP011569230, ISSN: 0278-0046, DOI: 10.1109/TIE.2014.2341598 beschreibt eine Möglichkeit um Batterien zu entladen mit einem Inverter, um eine den Batterien entnommene Gleichspannung in eine Wechselspannung zu wandeln.

JP 2019 071701 A beschreibt eine Entladungsbehandlungsmethode und ein Entladungsbehandlungsgerät für Altbatterien, das in der Lage ist, mehrere in Reihe geschaltete Alt-Einheitszellen zu entladen. Bei einer Entladungsbehandlungsmethode für Altbatterien, die eine Entladungsbehandlung mehrerer Alt-Einheitszellen durchführt, wird ein Hauptkreiswiderstand zwischen einer Anode eines Endes und einer Kathode des anderen Endes der mehreren in Reihe geschalteten Abfallzellen geschaltet, und Hilfsschaltungswiderstände und Hilfsschalter sind jeweils in Reihe zwischen der Anode und der Kathode jeder der mehreren Abfallzellen geschaltet. Das Verfahren umfasst einen normalen Zeitentladungsschritt zum Entladen der mehreren Abfall-Einheitszellen durch Fließen eines Entladestroms der mehreren Abfall-Einheitszellen in den Hauptschaltungswiderstand und einen Entladungsschritt während der Polaritätsumkehr zum Verbinden der Hilfsschaltungswiderstände, um die Abfall-Einheitszellen, die sich nicht sich in einem Polaritätsumkehrzustand befinden, durch Schließen der Hilfsschalter, die mit den Abfallzellen in dem Polaritätsumkehrzustand verbunden sind, wenn einige der mehreren Abfallzellen aufgrund einer Überentladung während des normalen Zeitentladungsschritts in den Polaritätsumkehrzustand versetzt werden.

JP 2019 033029 A beschreibt eine Vorrichtung zur Behandlung der Entladung von Abfallzellen umfassend: einen elektrischen Widerstand, der eine positive Elektrode eines Endes einer Vielzahl von in Reihe geschalteten Abfall-Einheitszellen mit einer negativen Elektrode des anderen Endes davon elektrisch verbindet; und eine Bypass-Einrichtung zum Herstellen einer elektrischen Verbindung zwischen einer negativen Elektrode und einer positiven Elektrode einer Abfall-Einheitszelle, die durch Überentladung der Vielzahl von Abfall-Einheitszellen in einen Zustand der Polaritätsumkehr übergegangen ist. Die Vorrichtung zur Behandlung der Entladung von Abfallzellen lässt den durch die elektromotorische Kraft der Vielzahl von Abfall-Einheitszellen erzeugten Entladestrom durch den elektrischen Widerstand fließen, um eine elektrische Restmenge der Vielzahl von Abfall-Einheitszellen zu entladen. Wenn eine oder mehrere der mehreren Abfall-Einheitszellen durch Überentladung in einen Zustand der Polaritätsumkehr gebracht wurden, lässt die Abfallzellen-Entladungsbehandlungsvorrichtung den Entladestrom über die Bypass-Einrichtung durch den elektrischen Widerstand fließen, um die Abfall-Einheitszellen, die sich noch nicht in einem Zustand der Polaritätsumkehr befinden, nacheinander zu entladen.

KR 102308374 B1 beschreibt ein Sekundärbatterie-Entladesystem und ein Verfahren dafür, das kontinuierlich oder periodisch den Zustand einer Batterieeinheit vor der Durchführung eines Entladevorgangs und/oder während eines Entladevorgangs verfolgt/diagnostiziert, um einen für den aktuellen Zustand der Batterieeinheit geeigneten Entladevorgang durchzuführen. Das Sekundärbatterie-Entladesystem umfasst: eine Leistungsumwandlungseinheit, die die Restenergie, die in einer elektrisch verbundenen Batterieeinheit geladen ist, an ein Leistungssystem entlädt; eine Widerstandsentladungseinheit, die elektrisch mit der Batterieeinheit verbunden ist, um eine Widerstandsentladung durchzuführen; eine Steuereinheit, die das folgende System steuert; und eine Schalteinheit, die die Verbindung zwischen der Batterieeinheit und der Leistungsumwandlungseinheit oder der Batterieeinheit und der Widerstandsentladungseinheit steuert.

CN 110729521 A beschreibt ein Verfahren, eine Schaltung und ein System zum Freisetzen der Restenergie einer Batterie. Die Batterie wird in einem ersten Schritt an einen ersten Entladungszweig angeschlossen und die Restenergie der Batterie wird über den ersten Entladungszweig freigesetzt. Die Batterie wird in einem zweiten Schritt an einen zweiten Entladungszweig angeschlossen und die Restenergie der Batterie wird über den zweiten Entladungszweig freigesetzt, wobei der Strom der an den zweiten Entladungszweig angeschlossenen Batterie kleiner ist als der Strom der an den ersten Entladungszweig angeschlossenen Batterie. Der erste Schritt und der zweite Schritt werden abwechselnd ausgeführt, bis die Spannung der Batterie unter einer festgelegten Sicherheitsspannung liegt.

### Offenbarung der Erfindung

Erfindungsgemäß werden eine Vorrichtung und ein Verfahren zum Entladen von Batterieeinheiten mit den Merkmalen der unabhängigen Patentansprüche vorgeschlagen. Vorteilhafte Ausgestaltungen sind Gegenstand der Unteransprüche sowie der nachfolgenden Beschreibung. Vorteile und vorteilhafte Ausgestaltungen der erfindungsgemäßen Vorrichtung und des erfindungsgemäßen Verfahrens ergeben sich aus der vorliegenden Beschreibung in entsprechende Weise.

Die vorliegende Erfindung schlägt eine Möglichkeit vor, um Batterien bzw. Batterieeinheiten komplett oder zumindest so weit wie möglich zu entladen, um die in der Batterie vorhandene Restenergie nutzen zu können. Zu diesem Zweck können eine oder mehrere Batterieeinheiten mit der erfindungsgemäßen (Entlade-) Vorrichtung verbunden werden, welche eine den Batterieeinheiten entnommene Gleichspannung in eine insbesondere mehrphasige Wechselspannung wandelt, welche zweckmäßigerweise in ein Wechselspannungsnetz eingespeist werden kann. Nach deren Entladung können die Batterieeinheiten beispielsweise einem Recyclingprozess zugeführt werden.

Die erfindungsgemäße (Entlade-) Vorrichtung zur (Tief-) Entladung weist eine Schalteranordnung auf, die dazu eingereicht ist, mit einer oder mehreren Batterieeinheiten verbunden zu werden und eine Reihenschaltung der verbundenen Batterieeinheiten zu erzeugen. Die Schalteranordnung weist zwei Gleichspannungsanschlüsse auf, zum Bereitstellen einer Gleichspannung, wenn wenigstens eine Batterieeinheit mit der Schalteranordnung verbunden ist. Zweckmäßigerweise können flexibel einzelne Batterieeinheiten mit der Schalteranordnung verbunden und auch wieder von dieser getrennt werden. Insbesondere weist die Schalteranordnung zu diesem Zweck eine Vielzahl von Schaltern bzw. Schalterelementen auf. Durch entsprechendes Öffnen (=nicht-leitend) oder Schließen (=leitend) dieser Schalterelemente können einzelne Batterieeinheiten zweckmäßigerweise in die Batterie-Reihenschaltung aufgenommen oder wieder aus dieser entfernt werden, insbesondere derart, dass weder für das Hinzufügen noch für das Entfernen der entsprechende Reihenschaltung-Stromkreis unterbrochen werden muss.

Die Entladevorrichtung weist ferner eine Stromrichterschaltung auf, welche mit den Gleichspannungsanschlüssen der Schalteranordnung verbunden ist. Die Stromrichterschaltung ist dazu eingerichtet, die an den bzw. zwischen den Gleichspannungsanschlüssen der Schalteranordnung bereitgestellte bzw. anliegende Gleichspannung in eine insbesondere mehrphasige Wechselspannung zu wandeln. Insbesondere ist die Stromrichterschaltung als eine Stromquelle- und senke vorgesehen. Diese Stromquelle/senke fungiert zweckmäßigerweise sowohl als eine Senke bzw. Last, um einen Stromfluss aus der Reihenschaltung der Batterieeinheiten zu entnehmen, als auch als eine Strom- bzw. Spannungsquelle, um Energie in ein Wechselspannungsnetz einzuspeisen. Besonders zweckmäßig hebt die Stromrichterschaltung die aus den Batterieeinheiten entnommen Gleichspannung auf ein höheres Spannungsniveau an und wandelt diese Gleichspannung in eine für ein entsprechendes Wechselspannungsnetz geeignete Wechselstromausgangsspannung.

Die Entladevorrichtung weist ferner wenigstens zwei Phasenanschlüsse zum Bereitstellen der von der Stromrichterschaltung erzeugten Wechselspannung auf. Insbesondere kann die erzeugte Wechselspannung über diese Phasenanschlüsse in ein Wechselspannungsnetz eingespeist werden, insbesondere in ein Niederspannungsnetz, beispielsweise in ein IT-Netz (französisch isolé terre, isolierte Erde; Niederspannungsnetz ohne galvanische Verbindung zwischen aktiven Leitern und Erde) oder TN-Netz (französisch terre neutre, neutrale Erde; Niederspannungsnetz mit Erdverbindung).

Die vorliegende Erfindung ermöglicht es besonders zweckmäßig, die Restspannung aus Batterieeinheiten effektiv zu entnehmen und für Verbraucher nutzbar zu machen, z.B. für ein (Wechsel-) Spannungsnetz, bevor die Batterieeinheiten z.B. einem Recyclingprozess zugeführt werden. Da die Restspannung einer einzelnen Batterieeinheit gegebenenfalls zu gering sein kann, um sie sinnvoll einer Stromsenke zuzuführen, ermöglicht es die Schalteranordnung flexibel eine Reihenschaltung einer Vielzahl von Batterieeinheiten zu erzeugen, um ein ausreichend hohes Spannungsniveau zu erreichen.

Die Erfindung eignet sich zweckmäßigerweise für eine Vielzahl unterschiedlicher Batterieeinheiten, insbesondere für Batterieeinheiten aus dem (Kraft- bzw. Elektro-) Fahrzeugbereich oder der elektrischen Antriebstechnik. Beispielsweise können einzelne Batterieeinheiten jeweils eine sog. Batteriezelle sein, als welche eine kleinste in einem Fahrzeug verbaute Batterieeinheit verstanden wird, welche beispielsweise eine Zellenspannung zwischen 2,5V und 4,4V aufweisen kann. Ferner können einzelne Batterieeinheit jeweils beispielsweise als ein Batteriemodul ausgebildet sein, als welches insbesondere eine Reihenschaltung mehrerer derartiger Batteriezellen verstanden wird, welche z.B. eine Nennspannung von bis zu 60V aufweisen kann. Beispielsweise können einzelne Batterieeinheiten auch jeweils ein Batteriepack sein, als welches eine Reihenschaltung aus einer Vielzahl von derartigen Batteriemodulen bezeichnet wird, welche z.B. eine Nennspannung von 200V bis zu 1000V aufweisen kann.

Da Batteriepacks oftmals über ein integriertes Batteriemanagement zum Schutz vor Unterspannung verfügen, ist es zweckmäßig, vor dem Entladen zunächst mit dem Batteriepack in Kommunikation zu treten, um das Batteriemanagement zu deaktivieren oder um eine spezielle Software zum Recyceln zu laden. Ein derartiger Vorgang kann für viele Recyclingunternehmen oftmals jedoch nicht umsetzbar sein, da die Batteriesoftware nicht zugänglich sein kann. Besonders zweckmäßig eignen sich daher Batteriemodule nach der Demontage derartiger Batteriepacks zum Tiefentladen mittels der vorgeschlagenen Vorrichtung.

Mit einer Nennspannung von z.B. bis zu 60V eines derartigen Batteriemoduls und bei Entladeströmen von beispielsweise bis zu 100A, kann sich eine Entladeleistung von bis zu 6kW ergeben. Da beispielsweise industrielle Halbbrückenumrichter oftmals unter 200V nicht mit sinnvoll betreibbar sind, bietet es sich besonders zweckmäßig an, eine Reihenschaltung der zu entladenden Batteriemodule zu verwenden. So kann die Entladeleistung beispielsweise bei einer Reihenschaltung von zehn derartigen 60V-Batteriemodulen auf bis zu 60kW erhöht werden. Eine derart erhöhte Entladeleistung kann durch Halbbrückenumrichter zweckmäßigerweise umgesetzt werden und es kann insbesondere eine höhere Systemleistung erzielt werden.

Die vorliegende Erfindung ermöglicht ein automatisches, großvolumiges und prozesssicheres Kurzschließen von Batterieeinheiten im industriellen Maßstab, insbesondere in Verbindung mit einer notwenigen Tiefentladung. Energie kann definiert aus den Batterieeinheiten entnommen und beispielsweise rückgespeist bzw. wiederverwendet werden. Durch die spezielle Verschaltung der erfindungsgemäßen Vorrichtung können Batterieeinheiten mit einem konstanten Strom kontinuierlich entladen werden, was die Entladung beschleunigt und Netzschwankungen bei der Einspeisung reduziert. Ferner kann durch die Erfindung eine hohe Prozesssicherheit gewährleistet werden, insbesondere in Bezug auf Arbeits- und Brandschutz, durch sicheres und vollständiges Entfernen der Restenergie der Batterieeinheiten. Die Erfindung ermöglicht die Verwirklichung großvolumiger Anlagen, in denen prozesssicher und weitestgehend automatisch Produktionsrückläufer und Feldrückläufer (End-of-Life Energiespeichern) der stofflichen Verwertung zugeführt werden können. Gesetzliche Bestimmungen in Verbindung mit dem umfangreichen Ausbau der Elektromobilität, z.B. Mindest-Rezyklat-Quoten wertvoller Metalle bei der Herstellung von neuen Energiespeichern, können somit eingehalten werden.

Gemäß einer besonders bevorzugten Ausführungsform wird im Zuge der Ansteuerung der Stromrichterschaltung eine Stromregelung durchgeführt, insbesondere derart, dass ein konstanter (Entlade-) Strom aus den mit der Schalteranordnung verbundenen Batterieeinheiten entnommen wird. Zu diesem Zweck werden einzelne Schaltelemente der Stromrichterschaltung entsprechend angesteuert, um einen konstanten Stromfluss zu ermöglichen.

Vorteilhafterweise erfolgt ein Trennen einer der verbundenen Batterieeinheiten von der Schalteranordnung bzw. ein Entfernen dieser Batterieeinheit aus der Reihenschaltung, wenn ein Spannungswert einer Klemmenspannung zwischen Anschlussklemmen dieser Batterieeinheit einen unteren Schwellwert erreicht. Das Erreichen dieses unteren Schwellwerts charakterisiert insbesondere, dass die jeweilige Batterieeinheit ausreichend entladen ist und von der Entladevorrichtung getrennt werden soll. Zweckmäßigerweise erfolgt dabei zunächst ein Entfernen aus dem Reihenstromkreis durch Öffnen entsprechender Schalterelemente der Schalteranordnung. Anschließend kann die jeweilige Batterieeinheit zweckmäßigerweise mechanisch getrennt bzw. entfernt werden und zweckmäßigerweise durch eine neue zu entladende Batterieeinheit ersetzt werden.

Besonders bevorzugt beträgt der Schwellwert 0V oder einen negativen Spannungswert. Wenn der von außen in diese Batterieeinheit eingeprägte Strom an einem Innenwiderstand der Batterieeinheit einen größeren Spannungsabfall erzeugt als die Spannungsquelle der Batterieeinheit selbst, kann zwischen den Batterieanschlussklemmen eine negative Spannung gemessen werden. Die Batteriespannung der internen Spannungsquelle der Batterieeinheit beträgt dann insbesondere 0V. Die Batterieeinheit ist in diesem Fall besonders zweckmäßig inaktiv und weist insbesondere keine Restspannung mehr auf. Bei einer Lagerung von tiefentladenen Batterieeinheiten besteht die Möglichkeit, dass diese nach einer gewissen Zeit wieder eine Restspannung aufbauen können. Durch das Inaktivieren der Batterieeinheit kann ein derartiges Regenerieren insbesondere verhindert werden. Durch die erzeugte Reihenschaltung der Batterieeinheiten können einzelne Batterieeinheiten zweckmäßigerweise entsprechend inaktiviert werden. Zu diesem Zweck können insbesondere Batterieeinheiten mit unterschiedlichen Ladezustand in Reihe geschaltet werden. Die Gesamtspannung der Reihenschaltung treibt einen Entladestrom in die Stromrichterschaltung, welche wiederum die Batterieeinheiten z.B. in das Wechselspannungsnetz entlädt. Die Spannung zwischen den Anschlussklemmen der einzelnen Batterieeinheiten nimmt durch diese Entladung immer weiter ab. Alle Batterieeinheiten treiben insbesondere aktiv Strom in die Stromrichterschaltung, so lange deren Klemmenspannung größer 0V ist. Fällt an einer Batterieeinheit die Klemmenspannung zwischen deren Anschlussklemmen auf 0V, so treiben die restlichen Batterieeinheiten in der Reihenschaltung weiterhin einen Strom durch diese entladene Batterieeinheit. In Folge dessen baut der Entladestrom in der tiefentladenen Batterieeinheit eine negative Klemmenspannung auf. Dabei kehrt sich die Klemmenspannung zwischen den Anschlussklemmen um. Erreicht der Spannungswert der Klemmenspannung den vorgegebenen unteren Schwellwert, z.B. -5V, wird diese Batterieeinheit von der Reihenschaltung entfernt. Alternativ kann der untere Schwellwert beispielsweise auch 0V oder im Wesentlichen 0V betragen.

Vorzugsweise wird ein Kurzschluss einer der verbundenen Batterieeinheiten erzeugt, wenn ein Spannungswert dieser Batterieeinheit den unteren Schwellwert erreicht bzw. unterschreitet. Insbesondere können Batterieeinheiten nach dem Tiefentladen mit kurzgeschlossenen Kontakten für eine bestimmte Zeitdauer gelagert werden, um eine Rückkehr der Batteriespannung zu verhindern. Zweckmäßigerweise kann dieser Kurzschluss bereits in der Entladevorrichtung noch vor dem Trennen der Batterieeinheit durchgeführt werden. Beispielsweise kann die Batterieeinheit zu diesem Zweck in der Entladevorrichtung mit einer Kurzschlussbrücke versehen werden. Insbesondere kann die jeweilige Batterieeinheit nach dem Erzeugen des Kurzschlusses von der Schalteranordnung getrennt und entfernt bzw. ausgetauscht werden.

Gemäß einer vorteilhaften Ausgestaltung weist die Schalteranordnung eine Vielzahl von Schaltereinheiten auf, wobei jede Schaltereinheit jeweils mit einer Batterieeinheit derart verbindbar ist, dass eine Reihenschaltung von mit einzelnen Schaltereinheiten verbundenen Batterieeinheiten erzeugt wird. Mit Hilfe der einzelnen Schaltereinheiten können flexibel einzelne Batterieeinheiten der Entladevorrichtung hinzugefügt oder auch wieder von dieser entfernt werden. Beispielsweise kann zunächst eine jeweilige Batterieeinheit mit einer geöffneten Schaltereinheit in Kontakt gebracht werden, beispielsweise über eine geeignete Kontaktierung. Durch anschließendes Schließen der jeweiligen Schaltereinheit kann die entsprechende Batterieeinheit in die Reihenschaltung mit weiteren Batterieeinheiten eingebracht werden. Ferner kann durch entsprechendes Öffnen einer Schaltereinheit eine jeweilige Batterieeinheit aus der Reihenschaltung entfernt werden, beispielsweise, wenn diese entladen ist. Diese Schaltereinheiten können besonders zweckmäßig jeweils ein Schütz bzw. Gleichspannungsschütz umfassen. Alternativ oder zusätzlich können die Schaltereinheiten jeweils zweckmäßigerweise einen oder mehrere Schalterelemente, z.B. in Form von mechanischen oder elektronischen Schaltern (z.B. Leistungshalbleiterschalterelemente bzw. Transistoren), aufweisen. Durch entsprechendes Öffnen oder Schließen dieser einzelnen Schaltereinheiten können jeweilige Batterieeinheiten zweckmäßigerweise in die Batterie-Reihenschaltung aufgenommen oder wiederaus dieser entfernt werden, insbesondere derart, dass weder für das Hinzufügen noch für das Entfernen der entsprechende Reihenschaltung-Stromkreis unterbrochen werden muss.

Vorteilhafterweise umfasst die Schalteranordnung eine Hauptschaltereinheit, die dazu eingerichtet ist, die Vielzahl von Schaltereinheiten mit den Gleichspannungsanschlüssen zu verbinden oder von diesen zu trennen. Insbesondere kann mittels dieser Hauptschaltereinheit die gesamte Reihenschaltung der verbundenen Batterieeinheiten mit den Gleichspannungsanschlüssen verbunden oder von diesen getrennt werden. Beispielsweise kann die Hauptschaltereinheit einen oder zwei Schaltelemente umfassen, wobei jeweils ein Schaltelement zwischen einen der Gleichspannungsanschlüsse und die Vielzahl von Schalteinheiten geschaltet ist.

Vorzugsweise umfasst die Schalteranordnung eine Drosseleinheit, die in Reihe zwischen einen der Gleichspannungsanschlüsse, insbesondere den positiven Gleichspannungsanschluss, und die Vielzahl von Schalteinheiten geschaltet ist. Insbesondere ist eine Spule bzw. Induktivität als diese Drosseleinheit vorgesehen. Bei Hinzufügen einer neuen Batterieeinheit zu der Reihenschaltung kann es zu einer schlagartigen Erhöhung der Systemspannung kommen, was wiederum zu einem Einschaltstromstoß führen kann. Die Drosseleinheit fungiert insbesondere als eine Dämpfungsdrossel, um diesen Einschaltstromstoß zu dämpfen bzw. zu unterdrücken und um somit die Entladevorrichtung bzw. deren einzelne Komponenten zu schützen.

Bevorzugt umfasst die Schalteranordnung wenigstens eine Halbleitereinheit, wobei jeweils eine Halbleitereinheit parallel zu einer mit einer der Schaltereinheiten verbindbaren Batterieeinheit geschaltet ist. Beispielsweise können diese Halbleitereinheiten jeweils eine oder mehrere Dioden umfassen oder beispielsweise Schaltelemente, z.B. Thyristoren. Beispielsweise können derartige Dioden jeweils als Freilaufdiode vorgesehen sein und ermöglichen es insbesondere, einen konstanten Stromfluss aufrecht zu erhalten. Wenn beispielsweise eine der Batterieeinheiten aus der Reihenschaltung entnommen werden soll, kann der Entladestrom beim Öffnen der Schalteinheit zweckmäßigerweise auf die Freilaufdiode kommutieren und unterbrechungsfrei weiterfließen. Beispielsweise können Dioden eine Durchlassspannung von 0,7V aufweisen, was die Entladespannung auf max. -0,7V begrenzen würde. Um diese Spannung weiter abzusenken, können insbesondere mehrere Dioden pro Batterieeinheit in Reihe geschaltet werden oder ein elektronischer Schalter als entsprechende Halbleitereinheit verwendet werden, z.B. jeweils ein Thyristor pro Batterieeinheit. Derartige elektronische Schalter bieten die Möglichkeit, die einzelnen Batterieeinheiten noch weiter zu entladen. Wird die minimale (negative) Entladespannung erreicht, kann der Thyristor beispielsweise gezündet werden. Dadurch wird die Batterieeinheit über den Thyristor kurzgeschlossen. Der Stromfluss wird nicht unterbrochen und die tiefentladene Batterieeinheit kann entnommen werden. Wird dann eine neue zu entladende Batterieeinheit mit dem Stromkreis verbunden, so wird der Thyristor durch die neue Batterieeinheit gelöscht und die Entladung kann von neuem beginnen.

Vorteilhafterweise umfasst die Schalteranordnung wenigstens eine Spannungsmesseinheit, wobei jeweils eine Spannungsmesseinheit zur Spannungsmessung einer mit einer der Schaltereinheiten verbindbaren Batterieeinheit eingerichtet ist. Somit können die einzelnen Batterieeinheiten insbesondere überwacht werden, um zu erkennen, wann die einzelnen Batterieeinheiten ausreichend entladen sind und entfernt bzw. ausgetauscht werden können.

Gemäß einer vorteilhaften Ausgestaltung umfasst die Schalteranordnung wenigstens eine Kontaktierungseinheit, wobei jeweils eine Kontaktierungseinheit zur automatischen Kontaktierung einer der Schaltereinheit mit einer Batterieeinheit eingerichtet ist. Zweckmäßigerweise kann jede dieser Kontaktierungseinheiten jeweils zwei Kontakt- bzw. Kontaktierungselemente umfassen, um eine jeweilige Batterieeinheit mit der entsprechenden Schaltereinheit mechanisch und elektrisch zu verbinden. Die Kontaktierung der einzelnen Batterieeinheiten kann somit zweckmäßigerweise vollautomatisch erfolgen. Eine derartige automatische Kontaktierung kann beispielsweise bei Verwendung von Halbleiterschaltelementen als Schaltereinheiten als sichere Trennvorrichtung dienen.

Bevorzugt weist die Entladevorrichtung ferner einen Kondensator auf, der zwischen die Gleichspannungsanschlüsse der Schalteranordnung geschaltet ist. Dieser Ausgangskondensator kann alternativ oder zusätzlich zu der obig genannten Drosseleinheit dazu vorgesehen sein, um den Einschaltstromstoß bei Hinzufügen einer neuen Batterieeinheit zu dämpfen. Insbesondere kann die Kapazität des Kondensators möglichst gering gewählt werden, so dass ein durch den Kondensator erhöhter systemischer Stromripple unkritisch bleibt.

Gemäß einer vorteilhaften Ausgestaltung weist die Stromrichterschaltung eine Gleichspannungswandlerschaltung und eine Wechselrichterschaltung auf. Die Gleichspannungswandlerschaltung weist vorzugsweise wenigstens eine Halbbrückenanschaltung auf und ist dazu eingerichtet, die an den bzw. zwischen den Gleichspannungsanschlüssen der Schalteranordnung bereitgestellte bzw. anliegende (erste) Gleichspannung in eine zweite Gleichspannung mit einem höheren Spannungsniveau zu wandeln und zweckmäßigerweise in einem Gleichspannungszwischenkreis bereitzustellen. Insbesondere erhöht die Gleichspannungswandlerschaltung somit die von der Reihenschaltung der Batterieeinheiten erzeugte Gleichspannung für einen Zwischenkreis bzw. Gleichspannungszwischenkreis. Die Halbbrückenanschaltungen der Gleichspannungswandlerschaltung weisen jeweils insbesondere zwei Schaltereinheiten auf, z.B. jeweils zwei Halbleiterschalter, z.B. Transistoren, MOSFETs usw. Ein Mittelabgriff zwischen diesen Schaltereinheiten ist zweckmäßigerweise mit einem der Gleichspannungsanschlüsse der Schalteranordnung verbunden, insbesondere mit dem positiven Gleichspannungsanschluss.

Bevorzugt weist die Wechselrichterschaltung ebenfalls wenigstens eine Halbbrückenschaltung auf und ist zweckmäßigerweise mit der Gleichspannungswandlerschaltung bzw. mit dem Gleichspannungszwischenkreis verbunden. Die Wechselrichterschaltung ist dazu eingerichtet, die von der Gleichspannungswandlerschaltung bereitgestellte zweite Gleichspannung in die Wechselspannung zu wandeln. Die Wechselrichterschaltung fungiert zweckmäßigerweise als Netzwechselrichter, um die zweite Gleichspannung des (Gleichspannungs-) Zwischenkreises in die insbesondere mehrphasige Wechselspannung für das Wechselspannungsnetz zu wandeln. Auch die Halbbrückenschaltungen der Wechselrichterschaltung weisen jeweils zwei Schaltereinheiten auf, z.B. je zwei Halbleiterschalter. Die Mittelabgriffe der Halbbrückenschaltungen der Wechselrichterschaltung sind zweckmäßigerweise jeweils mit einer Phasenleitung zur Bereitstellung der erzeugten mehrphasigen Wechselspannung vorgesehen.

Der Erfindung verwendet somit in vorteilhafter Weise (herkömmliche) Halbbrückenschaltungen zum Entladen von Batterieeinheiten, wie sie beispielsweise in industriellen Umrichtern, z.B. in der Antriebstechnik, eingesetzt werden. Um die dafür notwendigen Spannungsniveaus (z.B. Zwischenkreisspannungen von mehreren 100 V) zu erzielen, wird eine Reihenschaltung mehrerer Batteriemodule und eine Gleichspannungswandlerschaltung eingesetzt.

Solche Halbbrückenschaltungen bzw. Umrichter sind seit Jahren erprobt und stetig verbessert und weisen hohe Wirkungsgrade auf. Sie eignen sich besonders gut, um Batterieeinheiten so weit wie möglich zu entladen, indem sie die Restspannung der in Reihe geschalteten Batterieeinheiten auf das Spannungsniveau eines Gleichspannungszwischenkreises anheben und die Energie aus diesem Gleichspannungszwischenkreis in ein mehrphasiges Wechselspannungsnetz abführen.

Vorzugsweise umfasst die Stromrichterschaltung ferner eine Transformatoreinheit, die zwischen die wenigstens eine Halbbrückenschaltung der Wechselrichterschaltung und die Phasenanschlüsse geschaltet ist. Insbesondere können die Wechselrichterschaltung und die Transformatoreinheit als Netzwechselrichter fungieren, um die zweite Gleichspannung in eine für ein entsprechendes Wechselspannungsnetz geeignete Wechselstromausgangsspannung umzuwandeln.

Vorteilhafterweise weist die Stromrichterschaltung ferner ein Isolationsüberwachungsgerät bzw. einen Isolationswächter auf, welches bzw. welcher zwischen der Gleichspannungswandlerschaltung und der Wechselrichterschaltung geschaltet ist und ferner insbesondere mit einem Schutzleiter verbunden ist. Zweckmäßigerweise kann das Isolationsüberwachungsgerät eine Strom- oder Spannungsmessung gegen Erde durchführen und ferner insbesondere einen zusätzlichen Prüfstrom verwenden, um Isolationsfehler erkennen zu können Beispielsweise kann in Batteriepacks aus dem Fahrzeugbereich ein derartiger Isolationswächter installiert sein, der das Batteriepack bei einer Erdverbindung intern abschaltet. Besonders zweckmäßig kann ein derartiges Isolationsüberwachungsgerät in Verbindung mit einem IT-Netz verwendet werden.

Bevorzugt umfasst die Stromrichterschaltung ferner wenigstens einen Kondensator, insbesondere wenigstens einen Y-Kondensator, und/oder wenigstens eine Drosseleinheit, die jeweils zwischen die Gleichspannungswandlerschaltung und die Wechselrichterschaltung geschaltet sind. Insbesondere kann jeweils ein Y-Kondensator zwischen jede Leitung des Gleichspannungszwischenkreis und Masse geschaltet sein. Diese Y-Typ Kondensatoren können insbesondere als Entstörkondensatoren in Verbindung mit einem TN-Netz dienen. Als Drosseleinheit kann insbesondere jeweils eine stromkompensierte Spule bzw. Drossel in jeder Leitung des Gleichspannungszwischenkreis vorgesehen sein. Insbesondere können diese stromkompensierte Drossel und diese Kondensatoren zur Entstörung und Unterdrückung von Gleichtaktströmen vorgesehen sein.

Vorzugsweise umfasst die Stromrichterschaltung ferner wenigstens einen Kondensator, insbesondere wenigstens einen Y-Kondensator, der jeweils in eine Phasenleitung zwischen einer der Halbbrückenschaltung der Wechselrichterschaltung und einen der Phasenanschlüsse geschaltet ist, insbesondere zwischen die jeweilige Phasenleitung und einen Schutzleiter. Insbesondere können diese Kondensatoren zur Entstörung und/oder zum Schutz in einem TN-Netz dienen.

Erfindungsgemäß weist die Vorrichtung ferner wenigstens eine Entladeeinheit auf, wobei jede derartige Entladeeinheit jeweils dazu eingerichtet ist, mit einer Batterieeinheit verbunden zu werden. Jede Entladeeinheit weist jeweils ein erstes Gleichrichterelement, ein erstes Schalterelement und ein zweites Schalterelement auf. Das jeweilige erste Gleichrichterelement der jeweiligen Entladeeinheit ist in Reihe mit dem jeweiligen ersten Schalterelement der jeweiligen Entladeeinheit geschaltet. Jede der Entladeeinheiten ist jeweils derart mit einer Batterieeinheit verbindbar, dass die Reihenschaltung aus dem_jeweiligen ersten Gleichrichterelement und dem jeweiligen ersten Schalterelement der jeweiligen Entladeeinheit parallel zu der jeweiligen Batterieeinheit geschaltet ist und dass das jeweilige zweite Schalterelement der jeweiligen Entladeeinheit in Reihe mit der jeweiligen Batterieeinheit geschaltet und beispielsweise mit dem Pluspol der jeweiligen Batterieeinheit unmittelbar verbunden ist. Mit Hilfe dieser einzelnen Entladeeinheiten bzw. durch Ansteuern der jeweiligen Schalterelemente der einzelnen Entladeeinheiten können zu entladende Batterieeinheiten flexibel mit der Schalteranordnung verbunden und wieder von dieser getrennt werden und effektiv ausreichend tief entladen werden. Das erste Gleichrichterelement ist jeweils insbesondere vorgesehen, um einen kontinuierlichen Stromfluss zu gewährleisten und um eine sichere Entnahme entladener Batterieeinheiten im laufenden Prozess zu ermöglichen. Beispielsweise kann das erste Gleichrichterelement jeweils als eine Diode ausgebildet sein. Beispielsweise können die ersten und zweiten Schalterelemente jeweils als mechanische oder elektronische Schalter ausgebildet sein, z.B. als Leistungshalbleiterschalterelemente, Transistoren usw. Die Entladeeinheiten können beispielsweise alternativ oder zusätzlich zu den oben erläuterten Schaltereinheiten, der Hauptschaltereinheit, der Drosseleinheit, der wenigstens einen Halbleitereinheit, der wenigstens einen Spannungsmesseinheit und der wenigstens einen Kontaktierungseinheit in der Schalteranordnung vorgesehen sein.

Durch Verwendung einer Vielzahl derartiger Entladeeinheiten kann auf einfache und flexible Weise eine Reihenschaltung von Batterieeinheiten erzeugt werden, welche insbesondere auch jeweils unterschiedliche Speicherniveaus aufweisen können. Eine der Batterieeinheiten kann beispielsweise als ein Hilfsmodul verwendet werden, um die weiteren Batterieeinheiten zu entladen. Auf diese Weise wird eine gleichzeitige Tiefentladung von mehreren Batterieeinheiten ermöglicht, wobei durch eine Parameterüberwachung der einzelnen Batterieeinheiten insbesondere auch eine Entladung mit unterschiedlichen anfänglichen Ladezuständen ermöglicht wird.

Vorzugsweise weist jede Entladeeinheit ferner jeweils ein zweites Gleichrichterelement auf, welches jeweils in Reihe mit dem jeweiligen zweiten Schalterelement der jeweiligen Entladeeinheiten geschaltet ist. Dieses zweite Gleichrichterelement ist jeweils insbesondere zum Verhindern von Rückflüssen in die entladene Batterieeinheit vorgesehen. Beispielsweise kann auch das zweite Gleichrichterelementjeweils als eine Diode ausgebildet sein.

Bevorzugt sind das jeweilige erste Schalterelement und das jeweilige zweite Schalterelement jeder Entladeeinheit jeweils derart ansteuerbar, um eine mit der jeweilige Entladeeinheit verbundene Batterieeinheit zu entladen oder zu entfernern oder gegen eine neue Batterieeinheit auszutauschen. Je nachdem, ob die einzelnen Schalterelemente einer jeweiligen Entladeeinheit jeweils geöffnet oder geschlossen sind, kann die jeweilige Batterieeinheit in die Reihenschaltung mit weiteren zu entladenden Batterieeinheiten integriert werden und es kann kontinuierlich Energie aus der jeweiligen Batterieeinheit entzogen und der Stromrichterschaltung zugeführt werden. Ferner können die einzelnen Schalterelemente einer jeweiligen Entladeeinheit auch derart angesteuert werden, dass die jeweilige Batterieeinheit nicht mehr in die Reihenschaltung mit weiteren Batterieeinheiten integriert ist, ohne dabei einen Stromfluss in dieser Reihenschaltung zu unterbrechen.

Erfindungsgemäß wird, wenn eine zu entladende Batterieeinheit mit einer der Entladeeinheiten der Schalteranordnung verbunden ist, das erste Schalterelements dieser jeweiligen Entladeeinheit geöffnet und das zweite Schalterelement dieser jeweiligen Entladeeinheit geschlossen, um die zu entladende Batterieeinheit zu entladen. Durch das geschlossene zweite und das geöffnete erste Schaltelement wird die Batterieeinheit insbesondere mit den Gleichspannungsanschlüssen der Schalteranordnung verbunden und ferner insbesondere in die Reihenschaltung mit weiteren zu entladenden Batterieeinheiten integriert. Die zu entladende Batterieeinheit wird vorteilhafterweise entladen, bis ein vorgegebenes Ereignis eintritt, welches ein ausreichendes Entladen der jeweiligen Batterieeinheit charakterisiert. Die ausreichend entladende Batterieeinheit kann dann aus der Schalteranordnung entfernt oder gegen eine neue Batterie ausgetauscht werden. Beispielseise kann zum Erkennen dieses Ereignisses ein Spannungsverlauf der zu entladenden Batterieeinheit überwacht und auf ein entsprechendes Merkmal untersucht werden.

Das vorgegebene Ereignis kann insbesondere einen Verlust der elektrochemischen Eigenschaft bzw. des Vermögens der Batterieeinheit charakterisieren, Ladung bzw. Ladungsträger in der Batterieeinheit zu speichern. Das vorgegebene Ereignis charakterisiert dann insbesondere das Inaktivieren der Batterieeinheit und den Verlust des Speicherverhaltens bzw. des Speichervermögens der Batterieeinheit und charakterisiert zweckmäßigerweise eine Zerstörung der Batterieeinheit. Im Zuge der (Tief-) Entladung werden zweckmäßigerweise zuerst die Ladungsträger verarmt und danach die innere Speicherstruktur der Batterieeinheit zerstört. Das führt insbesondere dazu, dass die Batterieeinheit ab einem gewissen Zustand ihre Hauptfunktion verliert und nicht mehr geladen bzw. entladen werden kann. Eine Rückkehr der Batteriespannung ist dann insbesondere nicht mehr möglich. Die derartig tiefentladene Batterieeinheit kann dann zweckmäßigerweise dem Recyclingprozess unmittelbar oder zumindest zeitnah zugeführt werden, so dass eine Prozesssicherheit, insbesondere ein Arbeits- und Brandschutz, zweckmäßig gewährleistet werden kann. Durch eine derartige definierte Entnahme der Ladung kann insbesondere ein definierter Tiefentladezustand erreicht werden. Diese Zerstörung der Speicherstruktur verkürzt den Prozess und kann insbesondere die Schritte bezüglich dem Kurzschluss und der Lagerung ersparen.

Vorzugsweise wird das erste Schalterelements der jeweiligen Entladeeinheit bei weiterhin geschlossenem zweiten Schalterelement der jeweiligen Entladeeinheit geschlossen, wenn das vorgegebene Ereignisse eintritt, wenn die jeweilige Batterieeinheit also ausreichend tief entladen ist. Zur Vorbereitung auf die Entnahme der entladenen Batterieeinheit erfolgt nun insbesondere eine Kommutierung von dem zweiten Schalterelement auf das erste Schalterelement. An einer Verbindung des jeweiligen ersten und zweiten Gelichrichterelements der jeweiligen Entladeeinheit liegt dann insbesondere eine höhere Spannung als an der jeweiligen Batterieeinheit an, so dass das zweite Gleichrichterelement in Sperrrichtung betrieben wird. Der Strom über das jeweilige zweite Schalterelement und das jeweilige zweite Gleichrichterelement erlischt. Das jeweilige erste Schalterelement und das jeweilige erste Gleichrichterelement übernehmen den Strom. Wenn hingegen kein zweites Gleichrichterelement vorgesehen ist, kann bei der Kommutierung kurzzeitig ein Rückstrom in die Batterieeinheit erfolgen, bis das zweite Schalterelement geöffnet wird.

Vorzugsweise wird nun das zweite Schalterelement der jeweiligen Entladeeinheit geöffnet bei weiterhin geschlossenem ersten Schalterelement der jeweiligen Entladeeinheit. Die Batterieeinheit ist nun stromfrei und nicht mehr mit der Schalteranordnung elektrisch verbunden. Die ausreichend entladene Batterieeinheit wird nun vorzugsweise bei weiterhin geschlossenem ersten Schalterelement der jeweiligen Entladeeinheit und geöffnetem zweiten Schalterelement der jeweiligen Entladeeinheit entnommen.

Bevorzugt wird eine neue zu entladende Batterieeinheit mit der jeweiligen Entladeeinheit bei weiterhin geschlossenem ersten Schalterelement und geöffnetem zweiten Schalterelement der jeweiligen Entladeeinheit verbunden. Über das erste Schaltelement erfolgt der Stromfluss durch die Schalteranordnung. Wegen des noch geöffneten zweiten Schaltelements ist die neue Batterieeinheit elektrisch noch von der Schalteranordnung getrennt.

Bevorzugt wird das zweite Schalterelement bei weiterhin geschlossenem ersten Schalterelement der jeweiligen Entladeeinheit geschlossen. Es erfolgt nun insbesondere eine Kommentierung von dem ersten Schalterelement auf das zweite Schalterelement. Durch die positive Spannung der neuen Batterieeinheit erlischt der Strom durch das erste Schalterelement und der Stromfluss erfolgt durch das zweite Schalterelement.

Bevorzugt wird das erste Schalterelement bei weiterhin geschlossenem zweiten Schalterelement der jeweiligen Entladeeinheit geöffnet, um diese neue zu entladende Batterieeinheit zu entladen, bis erneut das vorgegebene Ereignis eintritt, welches ein ausreichendes Entladen dieser Batterieeinheit charakterisiert. Danach kann auch diese Batterieeinheit durch obig beschriebene Kommentierung der Schalterelemente entnommen bzw. ausgetauscht werden.

Vorteilhaferweise umfasst das Entladen der jeweiligen zu entladenden Batterieeinheit bis das vorgegebene Ereignis eintritt ein Entladen der Batterieeinheit, bis eine Messgröße der Batterieeinheit, z.B. ein Ladezustand oder ein Spannungswert, insbesondere die Klemmenspannung zwischen den Anschlussklemmen, einen vorgegebenen Schwellwert erreicht. Beispielsweise kann dieser Schwellwert ein Ladezustand von 0% oder ein Spannungswert der Klemmenspannung von 0V sein. Wenn die Messgröße diesen Schwellwert erreicht, erfolgt voreilhaferweise ein weiteres Entladen der Batterieeinheit, bis der Batterieeinheit eine vorgegebene Ladungsmenge entzogen wurde. Zweckmäßigerweise kann im Zuge eines derartigen Entladeprozesses bei einer bekannten (Anfangs-) Kapazität der jeweiligen Batterieeinheit zunächst ein Entladen mit konstantem Strom bis zu einem Triggerlevel erfolgen, z.B. bis zu einem Ladezustand von 0%, bis zu einem Spannungswert von 0V, bis zu einem definierten Spannungsniveau usw. Danach kann ein weiteres Entladen mit konstantem Strom erfolgen, bis eine notwendige Ladungsmenge entzogen wurde, z.B. 10% der Nennkapazität, um das Speichervermögen der Batterieeinheit zu zerstören.

Alterativ oder zusätzlich umfasst das Entladen der jeweiligen zu entladenden Batterieeinheit bis das vorgegebene Ereignis eintritt vorteilhafterweise ein Entladen der Batterieeinheit, bis ein Spannungsverlauf der Batterieeinheit, insbesondere ein zeitlicher Verlauf der Klemmenspannung zwischen den Anschlussklemmen, ein vorgegebenes Merkmal aufweist, insbesondere bis der Spannungsverlauf einen konstanten oder zumindest im Wesentlichen konstanten, negativen Sättigungsspannungswert erreicht. Im Zuge eines derartigen Entladeprozesses kann insbesondere bei einer unbekannten (Anfangs-) Kapazität der jeweiligen Batterieeinheit ein Entladen mit konstantem Strom erfolgen, bis sich die Batterieeinheit elektrisch wie ein konstanter Widerstand verhält. Die Klemmenspannung der Batterieeinheit sinkt dabei insbesondere in den negativen Bereich, steigt dann wieder an und geht in eine Sättigung, bleibt aber negativ. Sie bleibt anschließend bei konstantem Strom nahezu konstant, sofern die Temperatur konstant ist. In diesem Bereich, z.B. bei einem definierten Gradienten des Verlaufs der Klemmenspannung über der Zeit, wird die Entladung de Batterieeinheit gestoppt bzw. abgeschaltet. Die Batterieeinheit kann dann von der Schalteranordnung entfernt werden.

Eine erfindungsgemäße Recheneinheit, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch bevorzugte Ausgestaltungen einer erfindungsgemäßen Vorrichtung.
- Figur 2: zeigt schematisch eine bevorzugte Ausgestaltung einer erfindungsgemäßen Vorrichtung.
- Figur 3: zeigt schematisch eine bevorzugte Ausgestaltung einer erfindungsgemäßen Vorrichtung.
- Figur 4: zeigt schematisch eine bevorzugte Ausgestaltung einer erfindungsgemäßen Vorrichtung.
- Figur 5: zeigt schematisch bevorzugte Ausgestaltungen einer erfindungsgemäßen Vorrichtung.
- Figur 6: zeigt schematisch eine Entladeeinheit einer bevorzugten Ausgestaltung einer erfindungsgemäßen Vorrichtung in unterschiedlichen Schaltzuständen.
- Figur 7: zeigt schematisch eine Entladeeinheit einer bevorzugten Ausgestaltung einer erfindungsgemäßen Vorrichtung in unterschiedlichen Schaltzuständen.

### Detaillierte Beschreibung der Zeichnung

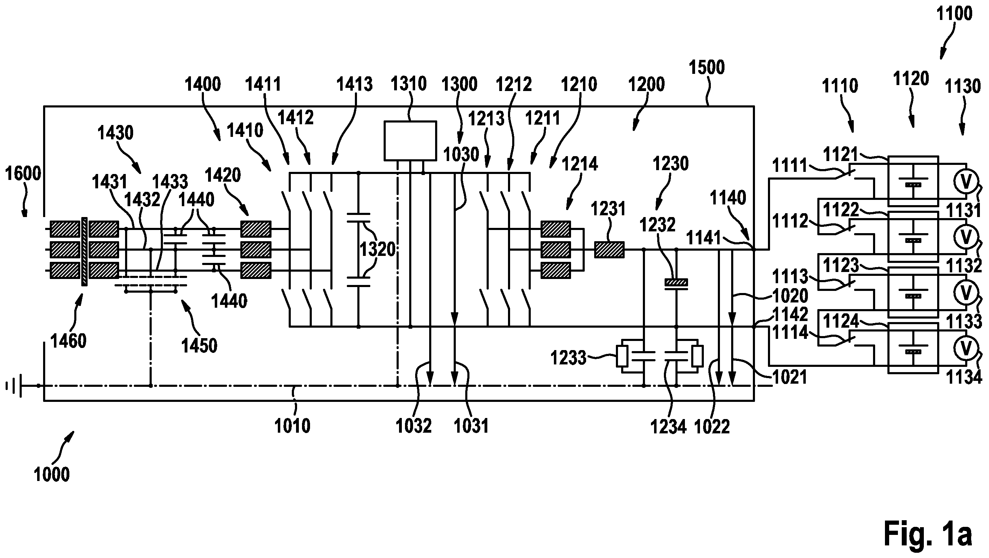

In Figur 1a ist eine bevorzugte Ausgestaltung einer erfindungsgemäßen Entladevorrichtung zur Tiefentladung von Batterieeinheiten schematisch dargestellt und mit 1000 bezeichnet.

Die Vorrichtung weist eine Schalteranordnung 1100 auf, welche wiederum eine Vielzahl von Schaltereinheiten 1110 aufweist. Jede dieser Schaltereinheiten 1110 ist jeweils mit einer Batterieeinheit 1120 derart verbindbar ist, dass eine Reihenschaltung von mit einzelnen Schaltereinheiten 1110 verbundenen Batterieeinheiten 1120 erzeugt wird. Im gezeigten Beispiel ist jede Schaltereinheit 1110 als ein Gleichspannungsschütz 1111, 1112, 1113, 1114 ausgebildet. Über jedes dieser Schütze 1111, 1112, 1113, 1114 kann jeweils eine Batterieeinheit 1121, 1122, 1123, 1124 angeschlossen und der Reihenschaltung hinzugefügt oder wieder von dieser entfernt werden. Beispielsweise können diese Batterieeinheiten 1121, 1122, 1123, 1124 jeweils als eine (Kraft-) Fahrzeugbatterie ausgebildet sein, z.B. jeweils als Batteriezelle, Batteriemodul oder Batteriepack.

Ferner weist die Schalteranordnung 1100 eine Vielzahl von Spannungsmesseinheiten 1130 auf, wobei jeweils eine Spannungsmesseinheit 1131, 1132, 1133, 1134 zur Spannungsmessung einer mit einer der Schaltereinheiten 1111, 1112, 1113, 1114 verbindbaren Batterieeinheit 1121, 1122, 1123, 1124 eingerichtet ist.

Die Schalteranordnung 1100 weist zwei Anschlüsse 1140 auf, insbesondere einen positiven Gleichspannungsanschluss 1141 und einen negativen Gleichspannungsanschluss 1142, zum Bereitstellen einer ersten Gleichspannung Uₒᵤₜ, welche insbesondere dem (Summen-) Spannungswert der durch die Schaltereinheiten 1110 in Reihenschaltung verbundenen Batterieeinheiten 1120 entspricht.

Die erste Gleichspannung Uₒᵤₜ ist in Figur 1a schematisch durch den Pfeil 1020 angedeutet. Ferner ist ein Potentialabfall U_{S-_PE} zwischen dem negativen Gleichspannungsanschluss 1142 und einem Schutzleiter 1010 durch das Bezugszeichen 1021 angedeutet. Ein Potentialabfall U_{S+_PE} zwischen dem positiven Gleichspannungsanschluss 1141 und dem Schutzleiter 1010, welcher der Summe der ersten Gleichspannung 1020 und dem Potentialabfall 1021 entspricht, ist durch das Bezugszeichen 1022 angedeutet.

Die Entladevorrichtung 1000 weist ferner eine Stromrichterschaltung 1500 auf, insbesondere eine Stromquelle- und senke, die dazu eingerichtet ist, die an den Gleichspannungsanschlüssen 1140 der Schalteranordnung 1100 bereitgestellte erste Gleichspannung 1020 in eine mehrphasige Wechselspannung zu wandeln.

Zu diesem Zweck weist die Stromrichterschaltung 1500 beispielsweise eine Gleichspannungswandlerschaltung 1200 auf, die dazu eingereicht ist, die erste Gleichspannung 1020 in eine zweite Gleichspannung U_{DC} mit einem höheren Spannungsniveau zu wandeln und in einem Gleichspannungszwischenkreis 1300 bereitzustellen.

Zu diesem Zweck weist die Gleichspannungswandlerschaltung 1200 wenigstens eine Halbbrückenschaltung 1210 auf, im gezeigten Beispiel drei Halbbrückenschaltungen 1211, 1212, 1213. Jede der Halbbrückenschaltungen 1211, 1212, 1213 weist jeweils zwei Schalter auf, wobei ein Mittelabgriff zwischen den Schaltern jeweils über eine Symmetriedrossel 1214 mit dem positiven Gleichspannungsanschluss 1141 verbunden ist. Die Halbbrückenschaltung 1210 umfasst somit beispielsweise drei parallele DC/DC Steller 1211, 1212, 1213, welche über die Symmetriedrosseln 1214 zusammengeschaltet werden, um Effekte durch Jittter in der Ansteuerung zu vermeiden oder zu eliminieren.

Die Schalter der Halbbrückenschaltungen 1211, 1212, 1213 können jeweils beispielsweise als Halbleiterschalter ausgebildet sein, z.B. jeweils als Transistor, MOSFET usw., insbesondere jeweils als elektronische Schalter inklusive Freilaufdiode.

Durch getaktetes Ansteuern der einzelnen Schalter der Halbbrückenschaltungen 1211, 1212, 1213 kann die erste Gleichspannung 1020 auf einen vorgegeben Spannungswert erhöht werden. Besonders zweckmäßig werden die Halbbrückenschaltungen 1211, 1212, 1213 zu diesem Zweck die in einer Stromregelung betrieben, so dass ein konstanter (Entlade-) Strom aus den mit der Schalteranordnung 1100 verbundenen Batterieeinheiten 1120 entnommen wird.

Ferner ist eine weitere Schaltung 1230 zwischen den Halbbrückenschaltungen 1210 und den Gleichspannungsanschlüssen 1140 vorgesehen, beispielsweise aufweisend eine DC-Glättungsdrossel 1231, einen (gepoltem) Elektrolytkondensator 1232 sowie zwei RC-Parallelschaltungen 1233 und 1234, welche beispielsweise zwei Cy- Kondensatoren mit Entladewiderstand gegen Erde entsprechen.

Die durch die Gleichspannungswandlerschaltung 1210 erzeugte und in dem Gleichspannungszwischenkreis 1300 bereitgestellte zweite Gleichspannung U_{DC} ist in Figur 1a mit dem Bezugszeichen 1030 angedeutet. Ferner ist mit dem Bezugszeichen 1031 ein Potentialunterschied U_{P-_PE} zwischen einem negativen Potentialanschluss der Gleichspannungswandlerschaltung 1210 und dem Schutzleiter 1010 angedeutet. Mit dem Bezugszeichen 1032 ist ein Potentialunterschied U_{P+_PE} zwischen einem positiven Potentialanschluss der Gleichspannungswandlerschaltung 1210 und dem Schutzleiter 1010 angedeutet.

In dem Gleichspannungszwischenkreis 1300 ist ferner ein Isolationsüberwachungsgerät bzw. einen Isolationswächter 1310 vorgesehen, welcher mit einer positiven Potentialleitung und einer negativen Potentialleitung des Zwischenkreises 1300 sowie mit dem Schutzleiter 1010 verbunden ist. Ferner sind in dem Gleichspannungszwischenkreis 1300 Zwischenkreiskondensatoren 1320 vorgesehen.

Die Stromrichterschaltung 1500 weist ferner eine Wechselrichterschaltung 1400 auf, die dazu eingerichtet, die von der Gleichspannungswandleranordnung 1200 in dem Gleichspannungszwischenkreis 1300 bereitgestellte zweite Gleichspannung 1030 in eine mehrphasige Wechselspannung zu wandeln und in ein Spannungsnetz einzuspeisen.

Zu diesem Zweck weist auch die Wechselrichterschaltung 1400 eine Vielzahl von Halbbrückenschaltung 1410 auf, im gezeigten Beispiel ebenfalls drei Halbbrückenschaltung 1411, 1412, 1413. Entsprechend den Halbbrückenschaltungen 1210 der Gleichspannungswandlerschaltung 1200 weisen diese Halbbrückenschaltungen 1411, 1412, 1413 der Wechselrichterschaltung 1400 jeweils zwei Schaltelemente auf, wobei ein Mittelabgriff zwischen diesen Schaltelementen jeweils mit einer Phasenleitung 1430 verbunden ist. Auch die Schaltelemente der Halbbrückenschaltungen 1410 können jeweils beispielsweise als Halbleiterschalter ausgebildet sein, z.B. jeweils als Transistor, MOSFET usw.

Die Halbbrückenschaltungen 1210 der Gleichspannungswandlerschaltung 1200 und die Halbbrückenschaltungen 1410 der Wechselrichterschaltung 1400 werden insbesondere in Abhängig voneinander getaktet und in Stromregelung angesteuert.

Im gezeigten Beispiel sind drei Phasenleitungen 1431, 1432, 1433 zum Bereitstellen einer dreiphasigen Wechselspannung vorgesehen. In jeder dieser Phasenleitungen 1431, 1432, 1433 ist ferner eine Drossel 1420 vorgesehen. Ferner sind Kondensatoren 1440 zwischen den einzelnen Phasenleitungen 1431, 1432, 1433 vorgesehen. Parasitäre Kondensatoren 1450 zwischen den Phasenleitungen 1431, 1432, 1433 und dem Schutzleiter 1010 ergeben sich durch Aufbau und Kabel, insbesondere als Kapazitäten der verwendeten Bauelemente gegen das Erdpotential.

Ferner weist die Stromrichterschaltung 1500 eine Transformatoreinheit 1460 auf. Die Wechselrichterschaltung 1410 und die Transformatoreinheit 1460 fungieren insbesondere als Netzwechselrichter, um die zweite Gleichspannung 1030 in eine für ein entsprechendes Wechselspannungsnetz geeignete Wechselstromausgangsspannung umzuwandeln.

Die Entladevorrichtung 1000 umfasst schließlich drei Phasenanschlüsse 1600, um die erzeugte Wechselspannung bereitzustellen und in ein entsprechendes Wechselspannungsnetz einzuspeisen, z.B. in ein IT-Netz.

Der Erfindung bedient sich insbesondere der Maßnahme, Halbbrückenschaltungen 1210, 1410 zum Entladen der Batterieeinheiten 1120 zu verwenden, wie sie herkömmlicherweise in industriellen Umrichtern zum Steuern von elektrischen Maschinen bzw. Antrieben verwendet werden.

Mit Hilfe der Schalteranordnung 1100 können flexibel einzelne Batterieeinheiten 1120 aus der Reihenschaltung entfernt werden und es können flexibel neue Batterieeinheiten der Reihenschaltung hinzugefügt werden, ohne dass dafür jeweils der Stromkreis unterbrochen wird. Beispielsweise können einzelne Batterieeinheiten 1120 entfernt werden, wenn ein Spannungswert einer Klemmenspannung zwischen den Anschlussklemmen dieser Batterieeinheiten jeweils einen unteren Schwellwert erreicht.

Dieser Schwellwert kann beispielsweise 0V oder ein negativer Spannungswert unter 0V sein. Durch die erzeugte Reihenschaltung können die einzelnen Batterieeinheiten 1120 zweckmäßigerweise inaktiviert werden. Auf diese Weise kann verhindert werden, dass sich bei einer Lagerung von tiefentladenen Batterieeinheiten 1120 wieder eine Restspannung aufbauen kann.

Zu diesem Zweck können insbesondere Batterieeinheiten 1120 mit unterschiedlichem Ladezustand in Reihe geschaltet werden. Wenn beispielsweise die Klemmenspannung U₁ der Batterieeinheit 1121 den Wert 20V beträgt, die Klemmenspannung U₂ der Batterieeinheit 1122 den Wert 30V, die Klemmenspannung U₃ der Batterieeinheit 1123 den Wert 25V und die Klemmenspannung U₄ der Batterieeinheit 1124 den Wert 40V, besitzt die Reihenschaltung eine Gesamtspannung U_{ges} von 115V. Die einzelnen Batterieeinheiten 1120 treiben aktiv einen Strom in die Stromrichterschaltung 1500, so lange deren Klemmenspannung größer 0V ist. Fällt durch die weitere Entladung beispielsweise die Klemmenspannung U₁ der Batterieeinheit 1121 auf den Wert 0V, wird durch die restlichen Batterieeinheiten 1122, 1123, 1124 der Reihenschaltung weiterhin ein Strom durch die tiefentladene Batterieeinheit 1121 getrieben. Die Gesamtspannung U_{ges} beträgt dann beispielsweise noch 95V. In Folge dessen baut der Entladestrom an der tiefentladenen Batterieeinheit 1121 eine negative Klemmenspannung auf. Die Spannungsmessung 1131 überwacht die Klemmenspannung U₁ der Batterieeinheiten 1121. Wenn diese Klemmenspannung U₁ den definierten unteren Schwellwert von z.B. -5V erreicht, wird die Batterieeinheit 1121 von der Reihenschaltung getrennt und gegen eine neue zu entladende Batterieeinheit ausgetauscht.

Vor dem Trennen von der Reihenschaltung kann insbesondere ein Kurzschluss der Batterieeinheit 1121 erzeugt werden, beispielsweise mit Hilfe einer Kurzschlussbrücke. Durch Lagern der Batterieeinheit 1121 mit kurzgeschlossenen Kontakten kann ferner eine Rückkehr der Batteriespannung verhindert werden.

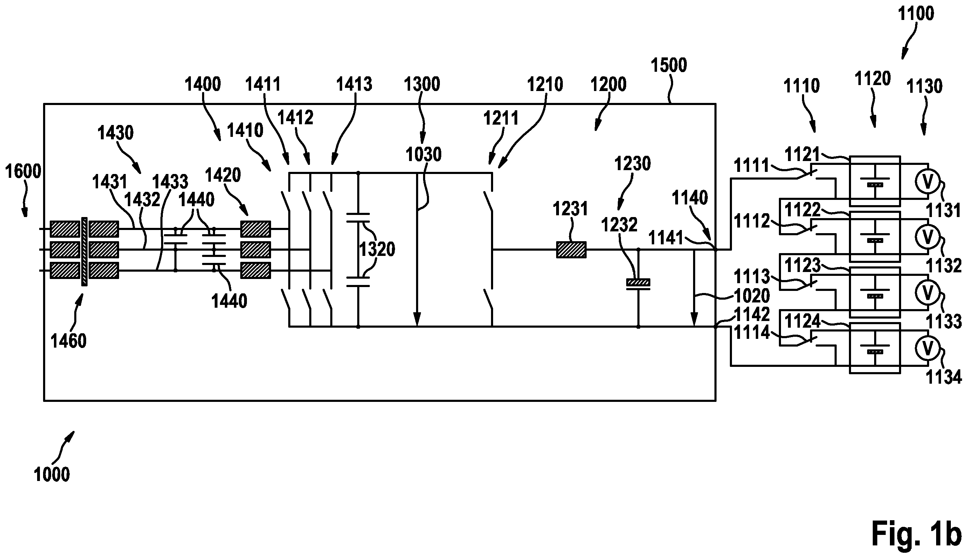

Figur 1b zeigt die Entladevorrichtung 1000 gemäß einer weiteren bevorzugten Ausgestaltung, wobei identische Bezugszeichen in den Figuren 1a und 1b gleiche oder baugleiche Elemente bezeichnen.

Die Entladevorrichtung der Figur 1b unterscheidet sich von der in Figur 1a gezeigten Vorrichtung in der Ausgestaltung der Stromrichterschaltung 1500. Die Stromrichterschaltung 1500 gemäß Figur 1b stellt eine vereinfachte Ausgestaltung dar, wobei die Halbbrückenschaltung 1210 der Gleichspannungswandlerschaltung 1200 nur eine Halbbrückenschaltung 1211 aufweist. Ferner weist die Schaltung 1230 nur den (gepolten) Elektrolytkondensator 1232 auf. Die Stromrichterschaltung 1500 auf Figur 1b kann entsprechend zu der Figur 1a einen Isolationswächter und bauteilbedingte parasitäre Kapazitäten aufweisen, welche in Figur 1b der Einfachheit halber nicht dargestellt sind.

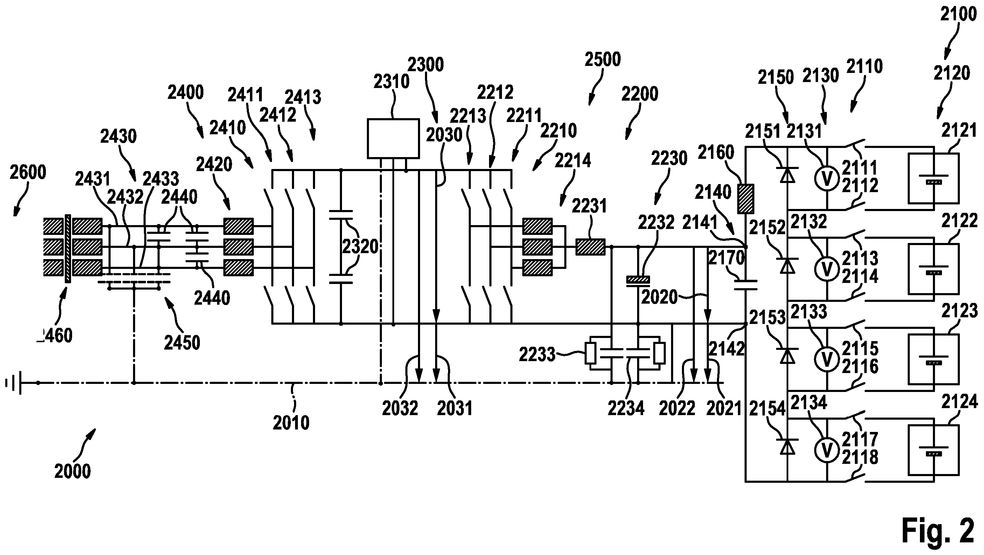

In Figur 2 ist eine weitere bevorzugte Ausgestaltung der erfindungsgemäßen Vorrichtung schematisch dargestellt und mit 2000 bezeichnet. Gleiche oder baugleiche Elemente der in Figur 2 gezeigten Entladevorrichtung 2000 im Vergleich zu der Entladevorrichtung 1000 aus Figur 1a bzw. 1b sind jeweils mit einem um den Wert "1000" erhöhten Bezugszeichen bezeichnet.

Entsprechend der Entladevorrichtung 1000 aus Figur 1 weist auch die in Figur 2 dargestellte Vorrichtung 2000 eine Schalteranordnung 2100 und eine Stromrichterschaltung 2500 mit einer Gleichspannungswandlerschaltung 2200, einem Zwischenkreis 2300 und einer Wechselrichterschaltung 2400 auf, sowie ferner drei Phasenanschlüsse 2600. Die Gleichspannungswandlerschaltung 2200, der Zwischenkreis 2300 und die Wechselrichterschaltung 2400 sowie deren einzelne Elemente sind beispielsweise entsprechend der Gleichspannungswandlerschaltung 1200, dem Zwischenkreis 1300 und der Wechselrichterschaltung 1400 aus Figur 1a ausgestaltet und sollen zur Vermeidung von Wiederholungen an dieser Stelle nicht gesondert erläutert werden. Die Vorrichtung 2000 aus Figur 2 unterscheidet sich von der in Figur 1 gezeigten Vorrichtung 1000 in der Ausgestaltung der Schalteranordnung 2100.

Die einzelnen Schaltereinheiten 2110 der Schalteranordnung 2100 umfassen jeweils zwei Schalter bzw. jeweils zwei Schütze 2111, 2112, 2113, 2114, 2115, 2116, 2117, 2118. So können beispielsweise die Schalter 2111, 2112 mit einer ersten Batterieeinheit 2121 verbunden werden, die Schalter 2113, 2114 mit einer zweiten Batterieeinheit 2122, die Schalter 2115, 2116 mit einer dritten Batterieeinheit 2123 und die Schalter 2117, 2118 mit einer vierten Batterieeinheit 2122. Eine Vielzahl von Spannungsmesseinheiten 2130 ist zur Spannungsmessung der verbundenen Batterieeinheiten 2120 vorgesehen, wobei jeweils eine Spannungsmesseinheit 2131, 2132, 2133, 2134 zwischen die Schalter jeder Schaltereinheiten 2110 geschaltet ist.

Ferner umfasst die Schalteranordnung 2100 eine Vielzahl von Halbleitereinheiten 2150, wobei jeweils eine Halbleitereinheit 2151, 2152, 2153, 2154 parallel zu einer mit einer der Schaltereinheiten 2110 verbindbaren Batterieeinheit 2120 geschaltet ist. Beispielsweise können diese Halbleitereinheiten 2150 jeweils als eine Diode vorgesehen sein, wobei diese Dioden 2150 jeweils als Freilaufdiode fungieren können, so dass ein Stromfluss aufrechterhalten wird, auch wenn eine verbundene Batterieeinheit aus der Reihenschaltung entfernt wird. Ferner kann jede Halbleitereinheit 2150 beispielsweise auch eine Reihenschaltung aus mehreren Dioden umfassen oder beispielsweise auch ein Schaltelement, z.B. einen Thyristor.

Wenn eine ausreichend entleerte Batterieeinheit von der Schalteranordnung 2100 entfernt und durch eine neue Batterieeinheit ersetzt wird, kann es beim Hinzufügen der neuen Batterieeinheit zu einer schlagartigen Erhöhung der Systemspannung und zu einem Einschaltstromstoß kommen. Um diesen Einschaltstromstoß zu dämpfen, sind eine Drosseleinheit 2160 und ein Ausgangskondensator 2170 vorgesehen. Die Drosseleinheit 2160 ist zwischen den positiven Gleichspannungsanschluss 2141 und die Schalteinheiten 2110 geschaltet. Der Ausgangskondensator ist zwischen die Gleichspannungsanschlüsse 2140 der Schalteranordnung 2100 geschaltet.

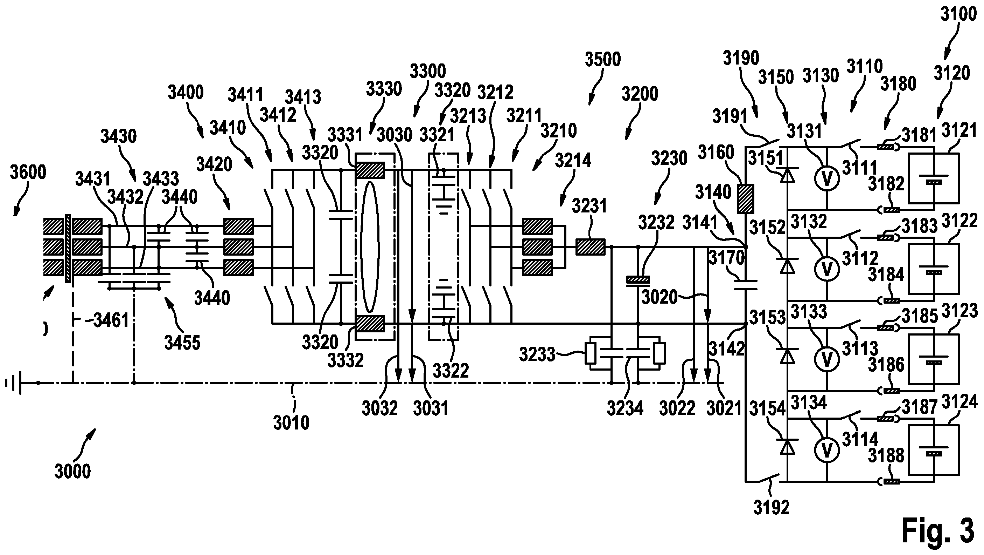

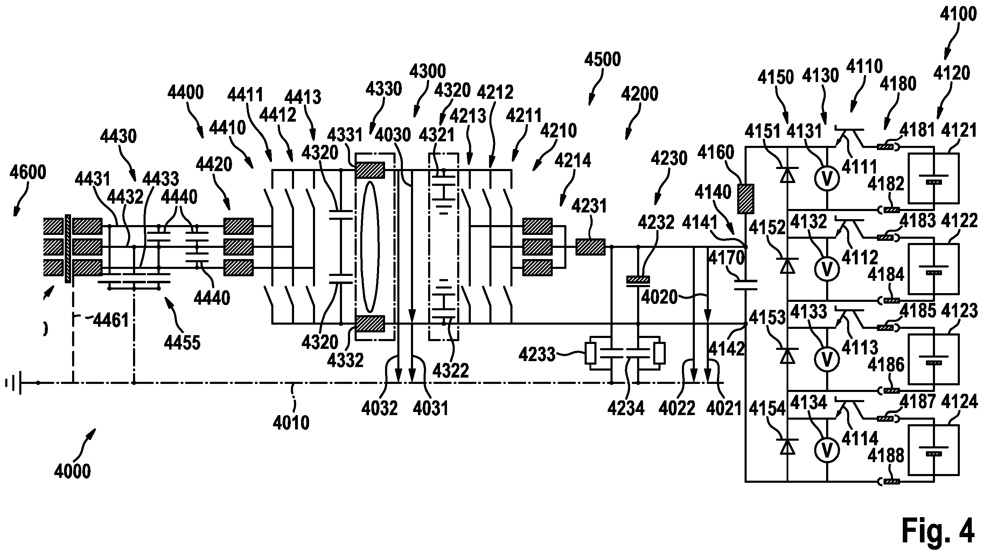

Die beiden Entladevorrichtungen 1000, 2000 der Figuren 1a, 1b und 2 eignen sich besonders zur Bereitstellung der jeweiligen Wechselspannung für ein IT-Netz. Die Entladevorrichtung kann jedoch auch zur Verwendung mit einem TN-Netz ausgestaltet sein, wie nachfolgen in Bezug auf die Figuren 3 und 4 erläutert werden soll.

In Figur 3 ist eine weitere bevorzugte Ausgestaltung der erfindungsgemäßen Vorrichtung schematisch dargestellt und mit 3000 bezeichnet. Gleiche oder baugleiche Elemente der Entladevorrichtung 3000 aus Figur 3 sind im Vergleich zu der Entladevorrichtung 2000 der Figur 2 jeweils mit einem um den Wert "1000" erhöhten Bezugszeichen bezeichnet.

Entsprechend den Entladevorrichtungen 1000 und 2000 aus den Figuren 1a, 1b und 2 weist auch die in Figur 3 gezeigte Vorrichtung 3000 eine Schalteranordnung 3100 und eine Stromrichterschaltung 3500 mit einer Gleichspannungswandlerschaltung 3200, einem Zwischenkreis 3300 und einer Wechselrichterschaltung 3400 auf, sowie ferner drei Phasenanschlüsse 3600.

Zur Verwendung in Verbindung mit einem TN-Spannungsnetz sind in dem Zwischenkreis 3300 anstelle des Isolationsüberwachungsgeräts 1310 bzw. 2310 eine Kondensatoranordnung 3320 und eine Drosseleinheit 3330 vorgesehen. Beispielsweise umfasst die Kondensatoranordnung 3320 zwei Kondensatoren 3321 und 3322, die jeweils zwischen eine Leitung des Gleichspannungszwischenkreises 3300 und Masse geschaltet sind. Diese Kondensatoren 3321 und 3322 können jeweils als Typ-Y-Kondensatoren bzw. als Entstörkondensatoren vorgesehen sein. Die Drosseleinheit 3330 kann in jeder Leitung des Gleichspannungszwischenkreises 3300 jeweils eine stromkompensierte Spule bzw. Drossel 3331, 3332 umfassen. Ferner sind die Phasenleitungen 3431, 3432, 3433 jeweils über einen Y-Kondensator 3455 an den Schutzeiter 3010 angebunden, um das EMV-Verhalten zu verbessern. Die Transformatoreinheit 3460 verfügt ferner über eine Sternpunkterdung 3461.

Die übrigen Elemente der Gleichspannungswandlerschaltung 3200, des Zwischenkreises 3300 und der Wechselrichterschaltung 3400 sind entsprechend der jeweilige Elemente der Gleichspannungswandlerschaltung 1200 bzw. 2200, des Zwischenkreises 1300 bzw. 2300 und der Wechselrichterschaltung 1400 bzw. 2400 aus den Figur 1a bzw. 2 ausgestaltet und werden zur Vermeidung von Wiederholungen an dieser Stelle nicht gesondert erläutert. Die Schalteranordnung 3100 der in Figur 3 gezeigten Vorrichtung 3000 unterscheidet sich hingegen von den Schalteranordnungen 1100 und 2100 der der Figuren 1a, 1b und 2.

Die Schaltereinheiten 3110 der Schalteranordnung 3100 umfassen jeweils einen Schalter 3111, 3112, 3113, 3114, welcher jeweils mit einer Batterieeinheit 3120 verbindbar ist. Zum Verbinden der Schaltereinheiten 3110 mit den Batterieeinheiten 3120 ist eine Vielzahl von Kontaktierungseinheiten 3180 vorgesehen. Beispielsweise umfasst jede dieser Kontaktierungseinheiten 3180 jeweils zwei Kontaktierungselemente zur automatischen Kontaktierung einer der Schaltereinheiten 3110 mit einer Batterieeinheit 3120. So sind beispielsweise die Kontaktierungselemente 3181 und 3182 vorgesehen, um den Schalter 3111 automatisch mit der Batterieeinheit 3121 zu kontaktieren. Entsprechend sind die Kontaktierungselemente 3183 und 3184 zur automatischen Kontaktierung des Schalters 3112 mit der Batterieeinheit 3122 vorgesehen, die Kontaktierungselemente 3185 und 3186 zur automatischen Kontaktierung des Schalters 3113 mit der Batterieeinheit 3123 und die die Kontaktierungselemente 3187 und 3188 zur automatischen Kontaktierung des Schalters 3114 mit der Batterieeinheit 3124. Eine derartige vollautomatische Kontaktierung kann beispielsweise als sichere Trennvorrichtung dienen.

Die Schalteranordnung 3100 umfasst ferner eine Hauptschaltereinheit bzw. ein DC-Hauptschütz 3190, um die Vielzahl von Schaltereinheiten 3110 mit den Gleichspannungsanschlüssen 3140 zu verbinden oder von diesen zu trennen. Zu diesem Zweck weist die Hauptschaltereinheit 3190 zwei Schalter 3191 und 3192 auf, die jeweils zwischen einen der Gleichspannungsanschlüsse 3140 und die Schaltereinheiten 3110 geschaltet sind.

Wie auch die in Figur 2 gezeigte Schalteranordnung 2100 umfasst auch die Schalteranordnung 3100 der Figur 3 eine Vielzahl an Halbleitereinheiten 3150, z.B. jeweils in der Form von Freilaufdioden 3150 für einen unterbrechungsfreien Entladestromfluss, sowie eine Drossel 3160 und einen Ausgangskondensator 3170 zur Dämpfung von Einschaltstromstößen.

In Figur 4 ist eine weitere bevorzugte Ausgestaltung der erfindungsgemäßen Vorrichtung schematisch dargestellt und mit 4000 bezeichnet. Gleiche oder baugleiche Elemente dieser Entladevorrichtung 4000 sind im Vergleich zu der in Figur 3 dargestellten Entladevorrichtung 3000 jeweils mit einem um den Wert "1000" erhöhten Bezugszeichen bezeichnet.

Die Gleichspannungswandlerschaltung 4200, der Gleichspannungszwischenkreis 4300 und die Wechselrichterschaltung 4400 der Stromrichterschaltung 4500 bzw. deren einzelne Elemente sind entsprechend der jeweiligen Elemente der Gleichspannungswandlerschaltung 3200, des Zwischenkreis 3300 und der Wechselrichterschaltung 3400 der Figur 3 ausgestaltet und werden zur Vermeidung von Wiederholungen nicht gesondert erläutert.

Die Vorrichtung 4000 unterscheidet sich gegenüber der Vorrichtung 3000 in der Ausgestaltung der Schalteranordnung 4100. Die Schalteranordnung 4100 weist im Gegensatz zu der Schalteranordnung 3100 keinen Hauptschaltereinheit 3190 auf, jedoch wäre eine Ausgestaltung mit Hauptschaltereinheit ebenso denkbar. Ferner sind die einzelnen Schaltereinheiten 4110 jeweils als ein (Leistungs-) Halbleiterschalter 4111, 4112, 4113, 4114 ausgebildet, z.B. jeweils als Transistor oder MOSFET.

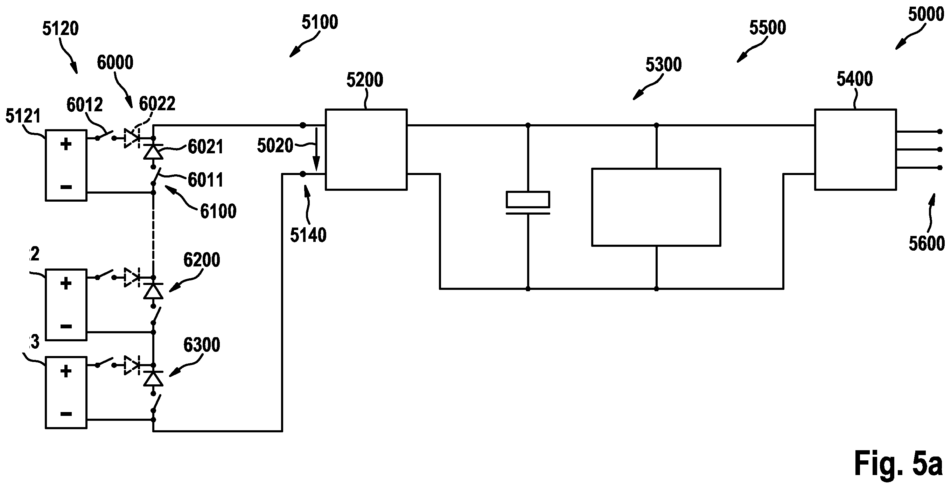

In den Figuren 5a bis 5e ist jeweils eine weitere bevorzugte Ausgestaltung der erfindungsgemäßen Vorrichtung schematisch dargestellt und jeweils mit 5000 bezeichnet. Gleiche oder baugleiche Elemente der in Figur 5a bis 5e gezeigten Entladevorrichtung 5000 im Vergleich zu den in den Figuren 1 bis 4 gezeigten Entladevorrichtungen sind jeweils mit einem um den Wert "1000" erhöhten Bezugszeichen bezeichnet.

Die Stromrichterschaltung 5500 sowie deren Gleichspannungswandlerschaltung 5200, Gleichspannungszwischenkreis 5300 und Wechselrichterschaltung 5400 sind in den Figuren 5a bis 5e jeweils nur vereinfacht schematisch dargestellt.

Wie in Figur 5a gezeigt ist, weist die Schalteranordnung 5100 eine Vielzahl von Entladeeinheiten 6000 auf, wobei jede dieser Entladeeinheiten 6100, 6200, 6300 jeweils dazu eingerichtet ist, mit einer Batterieeinheit 5121, 5122, 5123 verbunden zu werden. Jede dieser Entladeeinheiten 6000 weist jeweils ein erstes Schalterelement 6011 und ein zweites Schalterelement 6012 auf sowie ein erstes Gleichrichterelement 6021 auf. Optional können die Entladeeinheiten 6100, 6200, 6300 jeweils auch noch ein zweites Gleichrichterelement 6022 aufweisen. Diese Gleichrichterelemente 6021, 6022 können jeweils als Dioden ausgebildet sein. Das jeweilige erste Gleichrichterelement 6021 ist jeweils in Reihe mit dem jeweiligen ersten Schalterelement 6011 geschaltet. Wenn vorhanden, dann ist das jeweilige zweite Gleichrichterelement 6022 jeweils in Reihe mit dem jeweiligen zweiten Schalterelement 6012 geschaltet. Diese Reihenschaltung aus dem jeweiligen ersten Gleichrichterelement 6021 und dem jeweiligen ersten Schalterelement 6011 ist jeweils parallel zu jeweiligen Batterieeinheit 5120 geschaltet. Das jeweilige zweite Schalterelement 6012 ist jeweils in Reihe mit der jeweiligen Batterieeinheit 5120 geschaltet bzw. wenn das zweite Gleichrichterelement 6022 vorhanden ist, dann ist die Reihenschaltung aus dem jeweiligen zweiten Gleichrichterelement 6022 und dem jeweiligen zweiten Schalterelement 6012 jeweils in Reihe mit der jeweiligen Batterieeinheit 5120 geschaltet. Durch Ansteuern der jeweiligen ersten und zweiten Schalterelemente der einzelnen Entladeeinheiten 6000 kann mit der jeweiligen Entladeeinheit 6000 verbundene Batterieeinheit 5120 entladen oder entfernt werden.

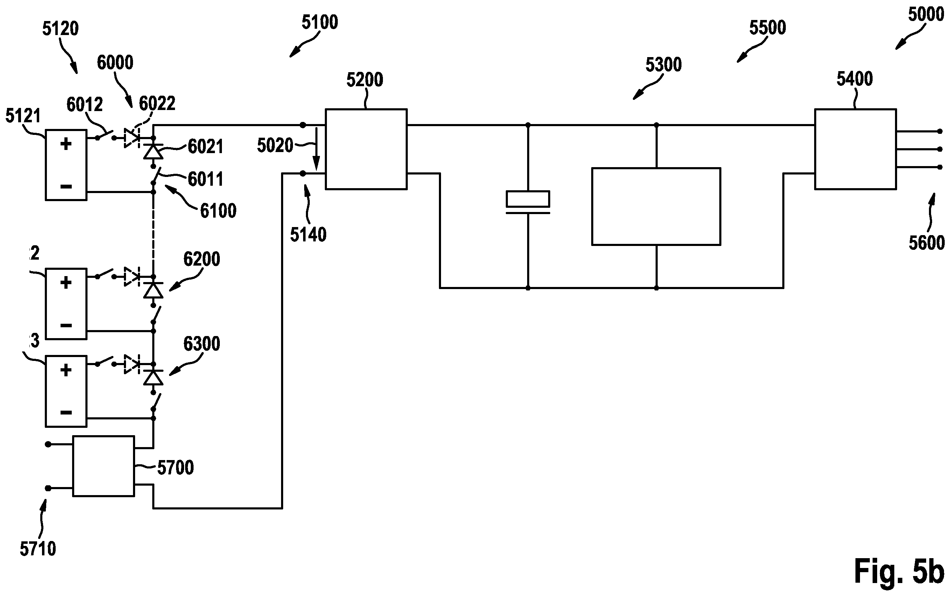

Die Schalteranordnung 5100 kann ferner eine zusätzliche Gleichstromquelle aufweisen, mit welcher die einzelnen zu einladenden Batterieeinheiten 5120 mittels der Entladeeinheiten 6000 in Reihe geschaltet werden können, so dass eine kontinuierliche Entladung der verbundenen Batterieeinheiten 5120 mit konstantem Strom ermöglicht werden kann, wie nachfolgend in Bezug auf die Figuren 5b bis 5e erläutert wird.

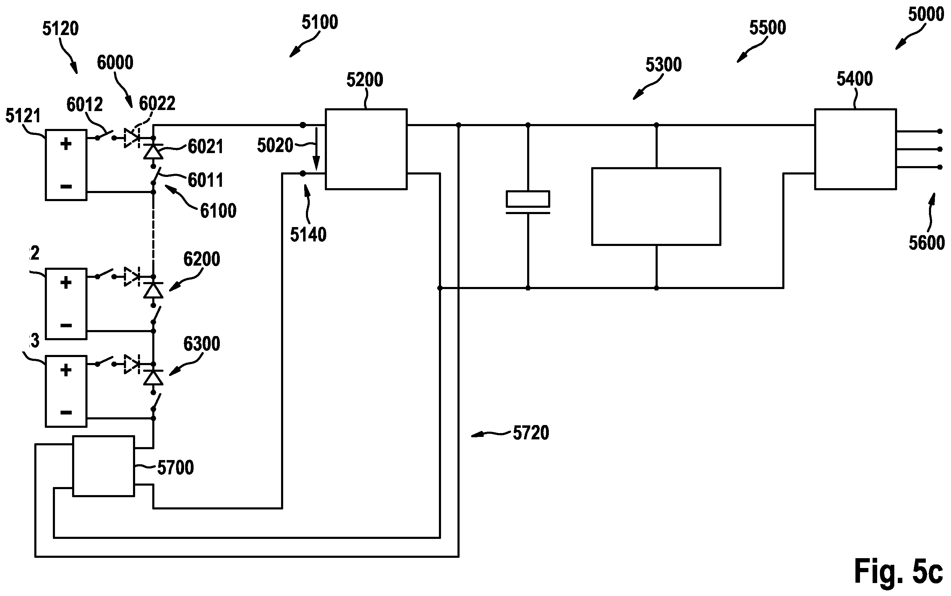

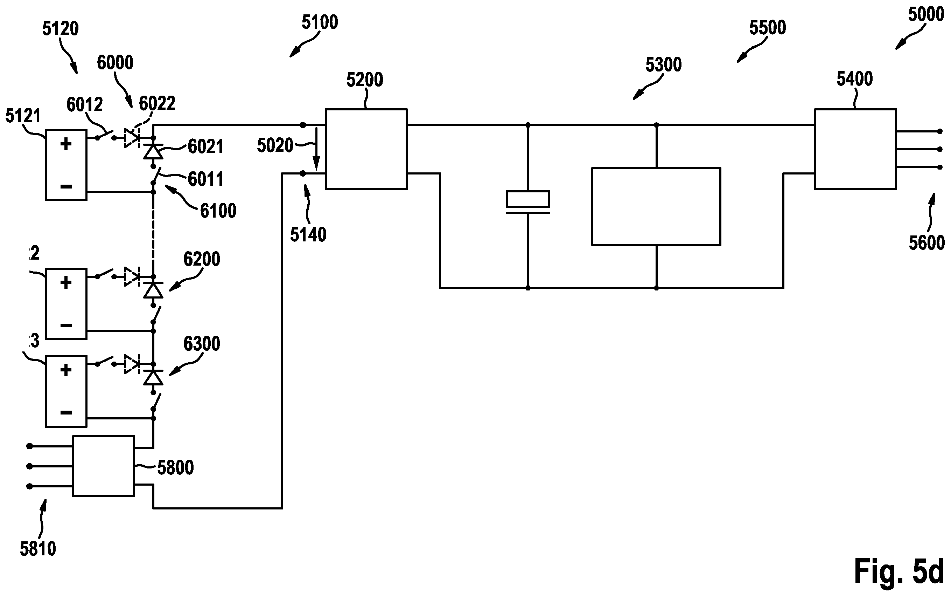

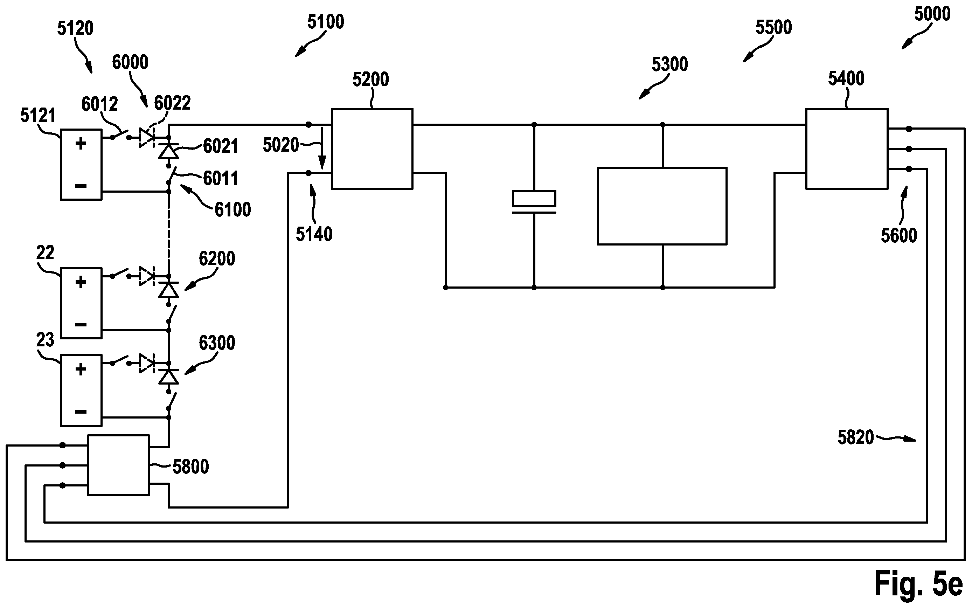

Wie in Figur 5b gezeigt ist, kann die Schalteranordnung 5100 als eine derartige zusätzliche Gleichstromquelle einen Gleichspannungswandler 5700 aufweisen. Dieser Gleichspannungswandler 5700 kann über Eingangsanschlüsse 5710 beispielsweise mit einem Gleichspannungsnetz verbunden sein. Wie in Figur 5c gezeigt, kann ein derartiger Gleichspannungswandler 5700 auch über eine entsprechende Rückspeisung 5720 aus dem Zwischenkreis 5300 der Stromrichterschaltung 5500 gespeist werden. Wie in Figur 5d gezeigt ist, kann die Schalteranordnung 5100 als zusätzliche Gleichstromquelle auch einen Gleichrichter 5800 aufweisen, dessen Eingangsanschlüsse 5810 beispielsweise mit einem Wechselspannungsnetz verbunden sein können. Wie in Figur 5e gezeigt, kann der Gleichrichter 5800 auch über eine Rückspeisung 5820 aus den Phasenanschlüssen 5600 der Stromrichterschaltung 5500 gespeist werden.

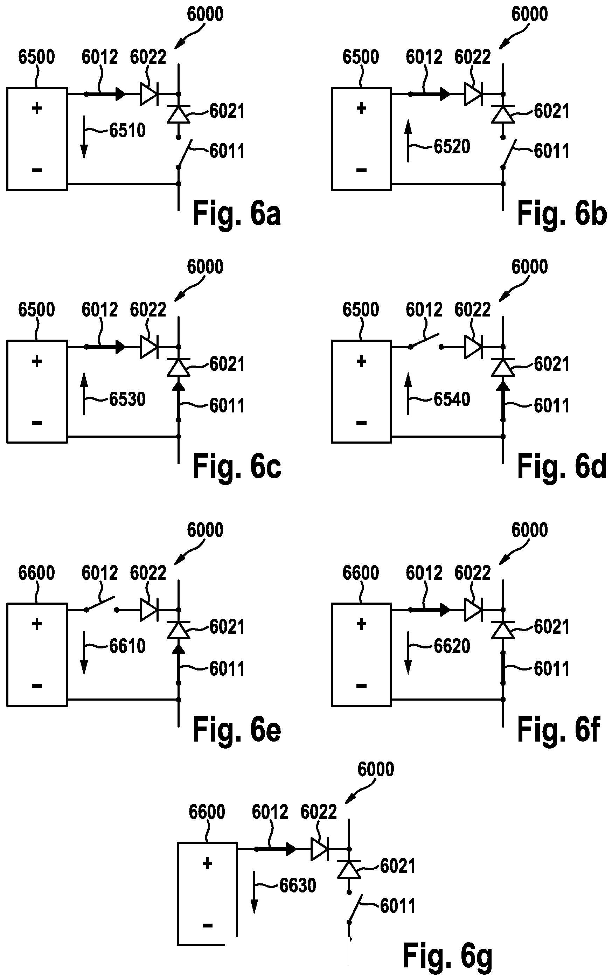

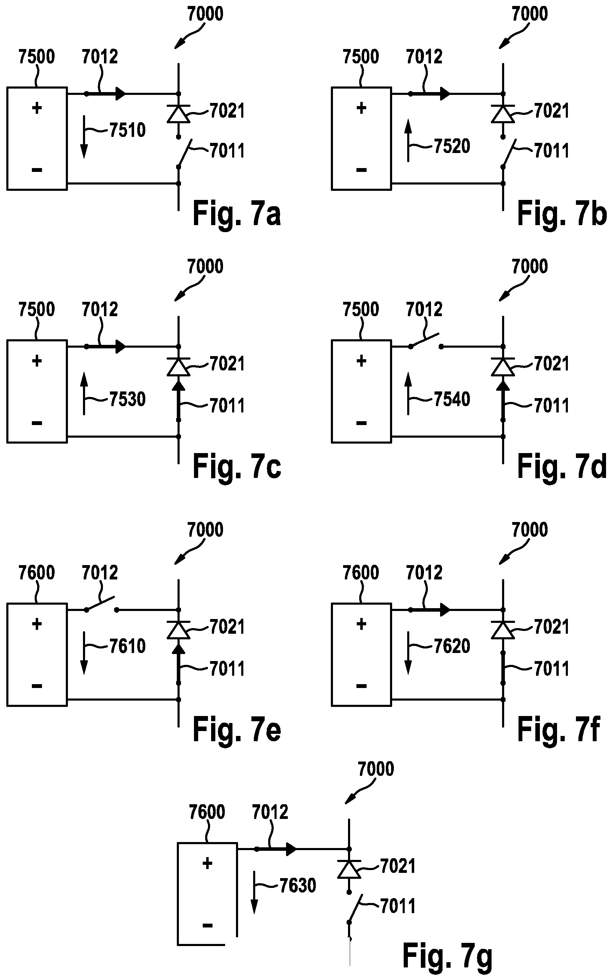

Nachfolgend wird in Bezug auf die Figuren 6 und 7 erläutert, wie mit Hilfe der verschiedenen Schaltzustände der Schalterelemente der Entladeeinheiten 6000 eine jeweilige verbundene Batterieeinheit entladen und anschließend ausgetauscht werden kann.

Die Figuren 6a bis 6g zeigen jeweils eine Entladeeinheit 6000 in verschiedenen Schaltzuständen. Identische Bezugszeichen in den Figuren 6a bis 6g sowie den Figuren 5a bis 5e bezeichnen dabei gleiche oder baugleiche Elemente.

Die in den Figuren 6a bis 6g gezeigte Entladeeinheit 6000 weist das erste Schalterelement 6011, Das zweite Schalterelement 6012 sowie das erste Gleichrichterelement 6021 und das zweite Gleichrichterelement 6022 auf.

In Figur 6a ist die Entladeeinheit 6000 mit einer zu entladenden Batterieeinheit 6500 verbunden. Das erste Schalterelements 6011 ist geöffnet und das zweite Schalterelement 6012 ist geschlossen. Die Batterieeinheit 6500 wird nun so lange entladen, bis ein vorgegebenes Ereignis eintritt, welches ein ausreichendes Entladen der Batterieeinheit 6500 charakterisiert und insbesondere einen Verlust der Eigenschaft der Batterieeinheit 6500, Ladung zu speichern. Die Batterieeinheit 6500 weist zunächst eine positive Klemmenspannung 6510 zwischen deren Anschlussklemmen auf und wird über die das zweite Schalterelement 6012 und das zweite Gleichrichterelement 6022 entladen.

In Figur 6b ist die Klemmenspannung 6520 der Batterieeinheit 6500 nun negativ und ein Umpolen der Klemmenspannung der Batterieeinheit 6500 wurde erzeugt. Dieses Umpolen der Klemmenspannung stellt einen Zeitpunkt dar, zu welchem eine Messgröße der Batterieeinheit einen vorgegebenen Schwellwert erreicht, z.B. zu welchem der Spannungswert der Klemmenspannung den Wert 0V erreicht. Daraufhin wird die Batterieeinheit 6500 bei geöffnetem ersten Schalterelement 6011 und geschlossenem zweiten Schalterelement 6012 weiter entladen, bis der Batterieeinheit 6500 eine vorgegebene Ladungsmenge von z.B. 10% Nennkapazität entzogen wurde, was dann dem vorgegebenen Ereignis entspricht, welches den Verlust des Speicherverhaltens bzw. des Speichervermögens der Batterieeinheit 6500 charakterisiert.

Wie in Figur 6c dargestellt ist, wird nach dem Eintritt dieses vorgegebenen Ereignisses das erste Schalterelements 6011 geschlossen bei weiterhin geschlossenem zweiten Schalterelement 6012. Es erfolgt nun eine Kommutierung von dem zweiten Schalterelements 6012 auf das erste Schalterelements 6011 bzw. von dem zweiten Gleichrichterelements 6022 auf das erste Gleichrichterelements 6021. An der Verbindung des ersten Gleichrichterelements 6021 und des zweiten Gleichrichterelements 6022 liegt eine höhere Spannung als an der Batterieeinheit 6500, so dass das zweite Gleichrichterelement 6022 in Sperrrichtung betrieben wird. Der Strom über das zweite Schalterelement 6012 und das zweite Gleichrichterelement 6022 erlischt. Das erste Schalterelement 6011 und das erste Gleichrichterelement 6021 übernehmen den Strom. Die Spannung 6530 an der Batterieeinheit 6500 entspricht insbesondere der Durchlassspannung des ersten Gleichrichterelements 6021.

Wie in Figur 6d gezeigt ist, wird nun das zweite Schalterelement 6012 geöffnet bei weiterhin geschlossenem ersten Schalterelements 6011. Die Spannung 6540 an der vollständig entladenen Batterieeinheit 6500 entspricht nun dem Wert 0V. Die Batterieeinheit 6500 kann nun entnommen werden.

Wie in Figur 6e gezeigt, wurde die vollständig entladenen Batterieeinheit 6500 gegen eine neue zu entladende Batterieeinheit 6600 ausgetauscht mit einer positiven Klemmenspannung 6610 bei weiterhin geschlossenem ersten Schalterelement 6011 und geöffnetem zweiten Schalterelement 6021. Der Stromfluss erfolgt weiterhin über das erste Schalterelement 6011 und das erste Gleichrichterelement 6021.

Wie in Figur 6f dargestellt, wird nun das zweite Schalterelement 6012 geschlossen bei weiterhin geschlossenem ersten Schalterelement 6012. Es erfolgt nun eine Kommutierung von dem ersten Schalterelement 6011 auf das zweite Schalterelement 6012 bzw. von dem ersten Gleichrichterelements 6021 auf das zweite Gleichrichterelement 6022. Nach diesem stromlosen Schließen des zweiten Schalterelements 6012 liegt durch die positive Spannung 6620 der neuen Batterieeinheit 6600 an dem zweiten Gleichrichterelement 6022 eine Sperrspannung an. Der Strom durch das erste Schalterelement 6011 und das erste Gleichrichterelement 6021 erlischt. Das zweite Schalterelement 6012 und das zweite Gleichrichterelement 6022 übernehmen den Strom.

Wie in Figur 6g gezeigt wird nun das erste Schalterelement 6011 wieder geöffnet und es erfolgt, entsprechend zu Figur 6a, ein Entladen der neuen Batterieeinheit 6600 mit noch positiver Klemmenspannung 6630 bei geöffnetem ersten Schalterelement 6011 und geschlossenem zweiten Schalterelement 6012, bis erneut das vorgegebene Ereignis eintritt.

Die Figuren 7a bis 7g zeigen jeweils eine Entladeeinheit 7000 gemäß einer weiteren bevorzugten Ausgestaltung der erfindungsgemäßen Vorrichtung in verschiedenen Schaltzuständen. Gleiche oder baugleiche Elemente in den Figuren 7a bis 7g im Vergleich zu den Figuren 6a bis 6g sind jeweils mit einem um den Wert "1000" erhöhten Bezugszeichen bezeichnet.

Entsprechend der Entladeeinheit 6000 weist auch die Entladeeinheit 7000 ein erstes Schalterelement 7011, ein zweites Schalterelement 7012 sowie ein Gleichrichterelement 7021 auf. Im Gegensatz zu der Entladeeinheit 6000 weist die Entladeeinheit 7000 hingegen kein zweites Gleichrichterelement auf. Das Gleichrichterelement 7021 kann beispielsweise als Diode ausgebildet sein und ist in Reihe mit dem ersten Schalterelement 7011 geschaltet. Diese Reihenschaltung aus dem Gleichrichterelement 7021 und dem ersten Schalterelement 7011 ist parallel zu einer zu entladenden Batterieeinheit 7500 mit positiver Klemmenspannung 7510 geschaltet. Das zweiten Schalterelement 7012 ist in Reihe mit der Batterieeinheit 7500 geschaltet.

Entsprechend der Figur 6a ist in Figur 7a das erste Schalterelements 7011 geöffnet und das zweite Schalterelement 6012 geschlossen und die Batterieeinheit 7500 wird entladen, bis ein vorgegebenes Ereignis eintritt.

Figur 7b zeigt, entsprechend der Figur 6b, die Batterieeinheit 7500 nach dem Umpolen der Klemmenspannung mit einer negativen Klemmenspannung 7520. Die Batterieeinheit 7500 wird nun bei geöffnetem ersten Schalterelement 7011 und geschlossenem zweiten Schalterelement 7012 weiter entladen, bis eine vorgegebene Ladungsmenge von z.B. 10% Nennkapazität entzogen wurde, was dann dem vorgegebenen Ereignis und dem Verlust des Speichervermögens entspricht.

Entsprechend der Figur 6c wird nun gemäß Figur 7c nach Eintritt dieses Ereignisses das erste Schalterelements 7011 geschlossen bei weiterhin geschlossenem zweiten Schalterelement 7012 zur Kommutierung von dem zweiten Schalterelements 7012 auf das erste Schalterelements 7011. Die Spannung 7530 an der Batterieeinheit 7500 entspricht der Durchlassspannung des ersten Gleichrichterelements 7021.

Entsprechend zur Figur 6d wird gemäß Figur 7d das zweite Schalterelement 7012 geöffnet. Die Spannung 7540 an der entladenen Batterieeinheit 7500 entspricht nun dem Wert 0V. Da in der Batterieeinheit 7500 chemisch keine negative Spannung generiert werden kann, kann die zweite Gleichrichterelement der Entladeeinheit 6000 zur Verhinderung eines Kurzschlusses auch entfallen.

Gemäß Figur 7e, wurde die vollständig entladenen Batterieeinheit 7500 gegen eine neue zu entladende Batterieeinheit 7600 mit positiver Klemmenspannung 7610 bei geschlossenem ersten Schalterelement 7011 und geöffnetem zweiten Schalterelement 7021 ausgetauscht.

Gemäß Figur 7f wird nun, entsprechend der Figur 6f, das zweite Schalterelement 7012 geschlossen für eine Kommutierung von dem ersten Schalterelement 7011 auf das zweite Schalterelement 7012.

Wie in Figur 7g gezeigt, wird das erste Schalterelement 7011 wieder geöffnet und es erfolgt, entsprechend zu Figur 7a, ein Entladen der neuen Batterieeinheit 7600 mit positiver Klemmenspannung 7630 bei geöffnetem ersten Schalterelement 6011 und geschlossenem zweiten Schalterelement 6012 bis das vorgegebene Ereignis eintritt.

## Patentansprüche

1. Vorrichtung (1000, 2000, 3000, 4000, 5000) zum Entladen von Batterieeinheiten (1120, 2120, 3120, 4120, 5120), aufweisend:
eine Schalteranordnung (1100, 2100, 3100, 4100, 5100), die dazu eingereicht ist, mit einer oder mehreren Batterieeinheiten (1120, 2120, 3120, 4120, 5120) verbunden zu werden und eine Reihenschaltung der verbundenen Batterieeinheiten (1120, 2120, 3120, 4120, 5120) zu erzeugen, wobei die Schalteranordnung (1100, 2100, 3100, 4100, 5100) zwei Gleichspannungsanschlüsse (1140, 2140, 3140, 4140, 5140) umfasst, zum Bereitstellen einer Gleichspannung (1020, 2020, 3020, 4020, 5020);
eine Stromrichterschaltung (1500, 2500, 3500, 4500, 5500), insbesondere eine Stromquelle- und senke, die dazu eingereicht ist, die an den Gleichspannungsanschlüssen (1140, 2140, 3140, 4140, 5140) der Schalteranordnung (1100, 2100, 3100, 4100, 5100) bereitgestellte Gleichspannung (1020, 2020, 3020, 4020, 5020) in eine Wechselspannung zu wandeln; und
Phasenanschlüsse (1600, 2600, 3600, 4600, 5600) zum Bereitstellen der von der Wechselrichterschaltung (1400, 2400, 3400, 4400, 5500) erzeugten Wechselspannung;
**dadurch gekennzeichnet, dass**
die Schalteranordnung (5100) wenigstens eine Entladeeinheit (6000, 7000) aufweist,
wobei jede der wenigstens einen Entladeeinheit (6000, 7000) dazu eingerichtet ist, mit einer Batterieeinheit (5120, 6500, 6600, 7500, 7600) verbunden zu werden,
wobei jede der wenigstens einen Entladeeinheit (6000, 7000) ein erstes Gleichrichterelement (6021, 7021), ein erstes Schalterelement (6011, 7011) und ein zweites Schalterelement (6012, 701 2) aufweist,
wobei das jeweilige erste Gleichrichterelement (6021, 7021) der jeweiligen Entladeeinheit (6000, 7000) in Reihe mit dem jeweiligen ersten Schalterelement (6011, 7011) der jeweiligen Entladeeinheit (6000, 7000) geschaltet ist,
wobei jede der wenigstens einen Entladeeinheit (6000, 7000) derart mit einer Batterieeinheit (5120, 6500, 6600, 7500, 7600) verbindbar ist, dass die Reihenschaltung aus dem jeweiligen ersten Gleichrichterelement (6021, 7021) und dem jeweiligen ersten Schalterelement (6011, 7011) der jeweiligen Entladeeinheit (6000, 7000) parallel zu der jeweiligen Batterieeinheit (5120, 6500, 6600, 7500, 7600) geschaltet ist und dass das jeweilige zweite Schalterelement (6022) der jeweiligen Entladeeinheit (6000, 7000) in Reihe mit der jeweiligen Batterieeinheit (5120, 6500, 6600, 7500, 7600) geschaltet ist.

2. Vorrichtung (1000, 2000, 3000, 4000) nach Anspruch 1, wobei die Schalteranordnung (1100, 2100, 3100, 4100) eine Vielzahl von Schaltereinheiten (1110, 2110, 3110, 4110) aufweist, wobei jede Schaltereinheit (1110, 2110, 3110, 4110) der Vielzahl von Schaltereinheiten jeweils mit einer Batterieeinheit (1120, 2120, 3120, 4120) derart verbindbar ist, dass eine Reihenschaltung von mit einzelnen Schaltereinheiten (1110, 2110, 3110, 4110) verbundenen Batterieeinheiten (1120, 2120, 3120, 4120) erzeugt wird.

3. Vorrichtung (1000, 2000, 3000, 4000) nach Anspruch 2, wobei die Schalteranordnung (1100. 2100, 3100, 4100) ferner eine oder mehrere der folgenden Einheiten aufweist:
eine Hauptschaltereinheit (3190), die dazu eingerichtet ist, die Vielzahl von Schaltereinheiten (3110) mit den Gleichspannungsanschlüssen (3140) zu verbinden oder von diesen zu trennen;
eine Drosseleinheit (2160, 3160, 4160), die zwischen einen der Gleichspannungsanschlüsse (2140, 3140, 4140) und die Vielzahl von Schaltereinheiten (2110, 3110, 4110) geschaltet ist;
wenigstens eine Halbleitereinheit (2150, 3150, 4150), wobei jeweils eine Halbleitereinheit (2150, 3150, 4150) parallel zu einer mit einer der Schaltereinheiten (2110, 3110, 4110) verbindbaren Batterieeinheit (2120, 3120, 4120) geschaltet ist;
wenigstens eine Spannungsmesseinheit (1130, 2130, 3130, 4130), wobei jeweils eine Spannungsmesseinheit (1130, 2130, 3130, 4130) zur Spannungsmessung einer mit einer der Schaltereinheiten (1110, 2110, 3110, 4110) verbindbaren Batterieeinheit (1120, 2120, 3120, 4120) eingerichtet ist;
wenigstens eine Kontaktierungseinheit (3180, 4180), wobei jeweils eine Kontaktierungseinheit (3180, 4180) zur automatischen Kontaktierung einer der Vielzahl von Schaltereinheiten (3110, 4110) mit einer Batterieeinheit (3120, 4120) eingerichtet ist.

4. Vorrichtung (2000, 3000, 4000) nach einem der vorstehenden Ansprüche, ferner aufweisend einen Kondensator (2170, 3170, 4170), der zwischen die Gleichspannungsanschlüsse (2140, 3140, 4140) der Schalteranordnung (2100, 3100, 4100) geschaltet ist.

5. Vorrichtung (1000, 2000, 3000, 4000, 5000) nach einem der vorstehenden Ansprüche, wobei die Stromrichterschaltung (1500, 2500, 3500, 4500, 5500) eine Gleichspannungswandlerschaltung (1200, 2200, 3200, 4200, 5200) und eine Wechselrichterschaltung (1400, 2400, 3400, 4400, 5400) aufweist,
wobei die Gleichspannungswandlerschaltung (1200, 2200, 3200, 4200, 5200) wenigstens eine Halbbrückenschaltung (1210, 2210, 3210, 4210) aufweist und dazu eingereicht ist, die an den Gleichspannungsanschlüssen (1140, 2140, 3140, 4140, 5140) der Schalteranordnung (1100, 2100, 3100, 4100, 5100) bereitgestellte Gleichspannung (1020, 2020, 3020, 4020, 5020) in eine zweite Gleichspannung (1030, 2030, 3030, 4030) mit einem höheren Spannungsniveau zu wandeln, und
wobei die Wechselrichterschaltung (1400, 2400, 3400, 4400, 5400) wenigstens eine Halbbrückenschaltung (1410, 2410, 3410, 4410) aufweist und dazu eingerichtet, die von der Gleichspannungswandleranordnung (1200, 2200, 3200, 4200, 5200) bereitgestellte zweite Gleichspannung (1030, 2030, 3030, 4030) in die Wechselspannung zu wandeln.

6. Vorrichtung (1000, 2000) nach Anspruch 5, wobei die Stromrichterschaltung (1500, 2500, 3500, 4500) ferner eine oder mehrere der folgenden Einheiten aufweist:
eine Transformatoreinheit (1460, 2460, 3460, 4460), die zwischen die wenigstens eine Halbbrückenschaltung (1410, 2410, 3410, 4410) der Wechselrichterschaltung (1400, 2400, 3400, 4400) und die Phasenanschlüsse (1470, 2470, 3470, 4470) geschaltet ist; und/oder
ein Isolationsüberwachungsgerät (1310, 2310), das zwischen die Gleichspannungswandlerschaltung (1200, 2200) und die Wechselrichterschaltung (1400, 2400) geschaltet ist; und/oder
wenigstens einen Kondensator (3320, 4320), insbesondere wenigstens einen Y-Kondensator, und/oder wenigstens eine Drosseleinheit (3330, 4330), die jeweils zwischen die Gleichspannungswandlerschaltung (3200, 4200) und die Wechselrichterschaltung (3400, 4400) geschaltet sind; und/oder
wenigstens einen Kondensator (3455, 4455), insbesondere wenigstens einen Y-Kondensator, der jeweils in eine Phasenleitung (3430, 4430) zwischen einer der Halbbrückenschaltung (3410, 4410) der Wechselrichterschaltung (3400, 4400) und einen der Phasenanschlüsse (3470, 4470) geschaltet ist, insbesondere zwischen die jeweilige Phasenleitung (3430, 4430) und einen Schutzleiter (3010, 4010).

7. Vorrichtung (5000) nach einem der vorstehenden Ansprüche, wobei jede der wenigstens einen Entladeeinheit (6000) ferner ein zweites Gleichrichterelement (6022) aufweist, wobei das jeweilige zweite Gleichrichterelement (6022) der jeweiligen Entladeeinheit (6000) in Reihe mit dem jeweiligen zweiten Schalterelement (6012) der jeweiligen Entladeeinheit (6000) geschaltet ist.

8. Vorrichtung nach einem der vorstehenden Ansprüche, wobei das jeweilige erste Schalterelement (6011, 7011) und das jeweilige zweite Schalterelement (6012, 7012) jeder der wenigstens einen Entladeeinheit (6000, 7000) derart ansteuerbar sind, um eine mit der jeweilige Entladeeinheit (6000, 7000) verbundene Batterieeinheit (5120, 6500, 6600, 7500, 7600) zu entladen oder zu entfernern oder gegen eine neue Batterieeinheit (5120, 6500, 6600, 7500, 7600) auszutauschen.

9. Verfahren zum Entladen von Batterien mit einer Vorrichtung (1000, 2000, 3000, 4000) nach einem der vorstehenden Ansprühe, umfassend die Schritte:
Verbinden von einer oder mehreren Batterieeinheiten (1120, 2120, 3120, 4120) mit der Schalteranordnung (1100, 2100, 3100, 4100) und Erzeugen einer Reihenschaltung der verbundenen Batterieeinheiten (1120, 2120, 3120, 4120);
Ansteuern der Stromrichterschaltung (1500, 2500, 3500, 4500) derart, dass die von der Schalteranordnung (1100, 2100, 3100, 4100) bereitgestellte Gleichspannung (1020, 2020, 3020, 4020) in eine Wechselspannung gewandelt wird; und
Bereitstellen der durch die Stromrichterschaltung erzeugten Wechselspannung an den Phasenanschlüssen (1600, 2600, 3600, 4600);
ferner umfassend die folgenden Schritte, wenn eine zu entladende Batterieeinheit (6500, 6600, 7500, 7600) mit einer der der wenigstens einen Entladeeinheit (6000, 7000) der Schalteranordnung (5100) der Vorrichtung (5000) verbunden ist:
Öffnen des ersten Schalterelements (6011, 7011) und Schließen des zweiten Schalterelements (6012, 7012) der jeweiligen Entladeeinheit (6000, 7000), um die zu entladende Batterieeinheit (6500, 7500) zu entladen, bis ein vorgegebenes Ereignis eintritt, welches ein ausreichendes Entladen der jeweiligen Batterieeinheit (6500, 6600, 7500, 7600) charakterisiert, insbesondere einen Verlust der Eigenschaft der Batterieeinheit (6500, 6600, 7500, 7600), Ladung zu speichern.

10. Verfahren nach Anspruch 9, wobei das Ansteuern der Stromrichterschaltung (1500, 2500, 3500, 4500), insbesondere ein Ansteuern der Gleichspannungswandlerschaltung (1200, 2200, 3200, 4200) und der Wechselrichterschaltung (1400, 2400, 3400, 4400), umfasst:
Durchführen einer Stromregelung, insbesondere derart, dass ein konstanter Strom aus den mit der Schalteranordnung (1100, 2100, 3100, 4100) verbundenen Batterieeinheiten (1120, 2120, 3120, 4120) entnommen wird.

11. Verfahren nach Anspruch 9 oder 10, ferner umfassend:
Trennen einer der verbundenen Batterieeinheiten (1120, 2120, 3120, 4120) von der Schalteranordnung (1100, 2100, 3100, 4100), wenn ein Spannungswert einer Klemmenspannung zwischen Anschlussklemmen dieser Batterieeinheit (1120, 2120, 3120, 4120) einen unteren Schwellwert erreicht,
wobei der untere Schwellwert insbesondere 0 V oder ein negativer Spannungswert ist.

12. Verfahren nach Anspruch 11, ferner umfassend:
Erzeugen eines Kurzschlusses einer der verbundenen Batterieeinheiten (1120, 2120, 3120, 4120), wenn ein Spannungswert dieser Batterieeinheit (1120, 2120, 3120, 4120) den unteren Schwellwert erreicht.

13. Verfahren nach einem der Ansprüche 9 bis 12, ferner umfassend:
Schließen des ersten Schalterelements (6011, 7011) der jeweiligen Entladeeinheit (6000, 7000) bei weiterhin geschlossenem zweiten Schalterelement (6012, 7012) der jeweiligen Entladeeinheit (6000, 7000), wenn das vorgegebene Ereignisse eintritt;
Öffnen des zweiten Schalterelements (6012, 7012) der jeweiligen Entladeeinheit (6000, 7000) bei weiterhin geschlossenem ersten Schalterelement (6011, 7011) derjeweiligen Entladeeinheit (6000, 7000);
Entnehmen der ausreichend entladenen Batterieeinheit (6500, 7500) bei weiterhin geschlossenem ersten Schalterelement (6011, 7011) der jeweiligen Entladeeinheit und geöffnetem zweiten Schalterelement (6012, 7012) der jeweiligen Entladeeinheit (6000, 7000).

14. Verfahren nach einem der Ansprüche 9 bis 13, ferner umfassend:
Verbinden einer neuen zu entladenden Batterieeinheit (6600, 7600) mit der jeweiligen Entladeeinheit (6000, 7000) bei weiterhin geschlossenem ersten Schalterelement (6011, 7011) der jeweiligen Entladeeinheit und geöffnetem zweiten Schalterelement (6012, 7012) der jeweiligen Entladeeinheit (6000, 7000);
Schließen des zweiten Schalterelements (6012, 7012) der jeweiligen Entladeeinheit (6000, 7000) bei weiterhin geschlossenem ersten Schalterelement (6011, 7011) derjeweiligen Entladeeinheit (6000, 7000);
Öffnen des ersten Schalterelements (6011, 7011) der jeweiligen Entladeeinheit (6000, 7000) bei weiterhin geschlossenem zweitem Schalterelement (6012, 7012) der jeweiligen Entladeeinheit (6000, 7000), um diese neue zu entladende Batterieeinheit (6600, 7600) zu entladen, bis das vorgegebene Ereignis eintritt, welches ein ausreichendes Entladen dieser Batterieeinheit (6600, 7600) charakterisiert.

15. Verfahren nach einem der Ansprüche 9 bis 14, wobei das Entladen der jeweiligen zu entladenden Batterieeinheit (6500, 6600, 7500, 7600), bis das vorgegebene Ereignis eintritt, ferner umfasst:
Entladen der Batterieeinheit (6500, 6600, 7500, 7600), bis eine Messgröße der Batterieeinheit (6500, 6600, 7500, 7600) einen vorgegebenen Schwellwert erreicht, und, wenn die Messgröße den Schwellwert erreicht, weiteres Entladen der Batterieeinheit (6500, 6600, 7500, 7600), bis der Batterieeinheit (6500, 6600, 7500, 7600) eine vorgegebene Ladungsmenge entzogen wurde, und/oder
Entladen der Batterieeinheit (6500, 6600, 7500, 7600), bis ein Spannungsverlauf der Batterieeinheit (6500, 6600, 7500, 7600) ein vorgegebenes Merkmal aufweist, insbesondere bis der Spannungsverlauf einen konstanten oder zumindest im Wesentlichen konstanten, negativen Sättigungsspannungswert erreicht.

## Claims

1. Device (1000, 2000, 3000, 4000, 5000) for discharging battery units (1120, 2120, 3120, 4120, 5120), comprising:
a switch arrangement (1100, 2100, 3100, 4100, 5100) which is arranged to be connected to one or more battery units (1120, 2120, 3120, 4120, 5120) and to generate a series connection of the connected battery units (1120, 2120, 3120, 4120, 5120), wherein the switch arrangement (1100, 2100, 3100, 4100, 5100) comprises two direct voltage connections (1140, 2140, 3140, 4140, 5140) for providing a direct voltage (1020, 2020, 3020, 4020, 5020);
a converter circuit (1500, 2500, 3500, 4500, 5500), in particular a current source and sink, which is arranged to convert the direct voltage (1020, 2020, 3020, 4020, 5020) provided at the direct voltage connections (1140, 2140, 3140, 4140, 5140) of the switch arrangement (1100, 2100, 3100, 4100, 5100) into an alternating voltage; and
phase connections (1600, 2600, 3600, 4600, 5600) for providing the alternating voltage generated by the inverter circuit (1400, 2400, 3400, 4400, 5500);
**characterized in that**
the switch arrangement (5100) comprises at least one discharge unit (6000, 7000), wherein each of the at least one discharge unit (6000, 7000) is arranged to be connected to a battery unit (5120, 6500, 6600, 7500, 7600),
wherein each of the at least one discharge unit (6000, 7000) comprises a first rectifier element (6021, 7021), a first switch element (6011, 7011) and a second switch element (6012, 7012),
wherein the respective first rectifier element (6021, 7021) of the respective discharge unit (6000, 7000) is connected in series with the respective first switch element (6011, 7011) of the respective discharge unit (6000, 7000),
wherein each of the at least one discharge unit (6000, 7000) is connectable to a battery unit (5120, 6500, 6600, 7500, 7600) such that the series connection of the respective first rectifier element (6021, 7021) and the respective first switch element (6011, 7011) of the respective discharge unit (6000, 7000) is connected in parallel to the respective battery unit (5120, 6500, 6600, 7500, 7600) and that the respective second switch element (6022) of the respective discharge unit (6000, 7000) is connected in series with the respective battery unit (5120, 6500, 6600, 7500, 7600).

2. Device (1000, 2000, 3000, 4000) according to claim 1, wherein the switch arrangement (1100, 2100, 3100, 4100) comprises a plurality of switch units (1110, 2110, 3110, 4110), wherein each switch unit (1110, 2110, 3110, 4110) of the plurality of switch units is connectable to a battery unit (1120, 2120, 3120, 4120) such that a series connection of battery units (1120, 2120, 3120, 4120) connected to individual switch units (1110, 2110, 3110, 4110) is generated.

3. Device (1000, 2000, 3000, 4000) according to claim 1 or 2, wherein the switch arrangement (1100, 2100, 3100, 4100) further comprises one or more of the following units:
a main switch unit (3190), which is arranged to connect the plurality of switch units (3110) to the direct voltage connections (3140) or to disconnect them from the latter;
a choke unit (2160, 3160, 4160), which is connected between one of the direct voltage connections (2140, 3140, 4140) and the plurality of switch units (2110, 3110, 4110);
at least one semiconductor unit (2150, 3150, 4150), wherein a respective semiconductor unit (2150, 3150, 4150) is connected in parallel to a battery unit (2120, 3120, 4120) connectable to one of the switch units (2110, 3110, 4110);
at least one voltage measuring unit (1130, 2130, 3130, 4130), wherein a respective voltage measuring unit (1130, 2130, 3130, 4130) is arranged for measuring the voltage of a battery unit (1120, 2120, 3120, 4120) connectable to one of the switch units (1110, 2110, 3110, 4110);
at least one contacting unit (3180, 4180), wherein a respective contacting unit (3180, 4180) is arranged for automatically contacting one of the plurality of switch units (3110, 4110) with a battery unit (3120, 4120).

4. Device (2000, 3000, 4000) according to one of the preceding claims, further comprising a capacitor (2170, 3170, 4170), which is connected between the direct voltage connections (2140, 3140, 4140) of the switch arrangement (2100, 3100, 4100).

5. Device (1000, 2000, 3000, 4000, 5000) according to one of the preceding claims, wherein the converter circuit (1500, 2500, 3500, 4500, 5500) comprises a direct voltage converter circuit (1200, 2200, 3200, 4200, 5200) and an inverter circuit (1400, 2400, 3400, 4400, 5400),
wherein the direct voltage converter circuit (1200, 2200, 3200, 4200, 5200) comprises at least one half-bridge circuit (1210, 2210, 3210, 4210) and is arranged to convert the direct voltage (1020, 2020, 3020, 4020, 5020) provided at the direct voltage connections (1140, 2140, 3140, 4140, 5140) of the switch arrangement (1100, 2100, 3100, 4100, 5100) into a second direct voltage (1030, 2030, 3030, 4030) with a higher voltage level,
wherein the inverter circuit (1400, 2400, 3400, 4400, 5400) comprises at least one half-bridge circuit (1410, 2410, 3410, 4410) and is arranged to convert the second direct voltage (1030, 2030, 3030, 4030) provided by the direct voltage converter circuit (1200, 2200, 3200, 4200, 5200) into the alternating voltage.

6. Device (1000, 2000) according to claim 5, wherein the converter circuit (1500, 2500, 3500, 4500) further comprises one or more of the following units:
a transformer unit (1460, 2460, 3460, 4460), which is connected between the at least one half-bridge circuit (1410, 2410, 3410, 4410) of the inverter circuit (1400, 2400, 3400, 4400) and the phase connections (1470, 2470, 3470, 4470); and/or an insulation monitoring device (1310, 2310), which is connected between the direct voltage converter circuit (1200, 2200) and the inverter circuit (1400, 2400); and/or at least one capacitor (3320, 4320), in particular at least one Y-capacitor, and/or at least one choke unit (3330, 4330), each of which is connected between the direct voltage converter circuit (3200, 4200) and the inverter circuit (3400, 4400); and/or at least one capacitor (3455, 4455), in particular at least one Y-capacitor, which is connected in each case into a phase line (3430, 4430) between one of the half-bridge circuits (3410, 4410) of the inverter circuit (3400, 4400) and one of the phase connections (3470, 4470), in particular between the respective phase line (3430, 4430) and a protective conductor (3010, 4010).

7. Device (5000) according to one of the preceding claims, wherein each of the at least one discharge unit (6000) comprises a second rectifier element (6022), wherein the respective second rectifier element (6022) of the respective discharge unit (6000) is connected in series with the respective second switch element (6012) of the respective discharge unit (6000).

8. Device according to one of the preceding claims, wherein the respective first switch element (6011, 7011) and the respective second switch element (6012, 7012) of each of the at least one discharge unit (6000, 7000) are controllable to discharge a battery unit (5120, 6500, 6600, 7500, 7600) connected to the respective discharge unit (6000, 7000) or to remove it or exchange it for a new battery unit (5120, 6500, 6600, 7500, 7600).

9. Method for discharging batteries with a device (1000, 2000, 3000, 4000) according to one of the preceding claims, comprising the steps:
connecting one or more battery units (1120, 2120, 3120, 4120) to the switch arrangement (1100, 2100, 3100, 4100) and generating a series connection of the connected battery units (1120, 2120, 3120, 4120);
controlling the converter circuit (1500, 2500, 3500, 4500) such that the direct voltage (1020, 2020, 3020, 4020) provided by the switch arrangement (1100, 2100, 3100, 4100) is converted into an alternating voltage; and
providing the alternating voltage generated by the converter circuit at the phase connections (1600, 2600, 3600, 4600);
further comprising the following steps if a battery unit to be discharged (6500, 6600, 7500, 7600) is connected to one of the at least one discharge unit (6000, 7000) of the switch arrangement (5100) of the device (5000):
opening the first switch element (6011, 7011) and closing the second switch element (6012, 7012) of the respective discharge unit (6000, 7000) to discharge the battery unit to be discharged (6500, 7500), until a predetermined event occurs, which characterizes sufficient discharging of the battery unit (6500, 6600, 7500, 7600), in particular a loss of the property of the battery unit (6500, 6600, 7500, 7600) to store charge.

10. Method according to claim 9, wherein the controlling of the converter circuit (1500, 2500, 3500, 4500), in particular the direct voltage converter circuit (1200, 2200, 3200, 4200) and the inverter circuit (1400, 2400, 3400, 4400), comprises:
performing a current control, in particular such that a constant current is taken from the battery units (1120, 2120, 3120, 4120) connected to the switch arrangement (1100, 2100, 3100, 4100).

11. Method according to claim 9 or 10, further comprising:
disconnecting one of the connected battery units (1120, 2120, 3120, 4120) from the switch arrangement (1100, 2100, 3100, 4100) if a voltage value of a terminal voltage between terminal connections of this battery unit (1120, 2120, 3120, 4120) reaches a lower threshold value,
wherein the lower threshold value is in particular 0 V or a negative voltage value.

12. Method according to claim 11, further comprising:
generating a short circuit of one of the connected battery units (1120, 2120, 3120, 4120) if a voltage value of this battery unit (1120, 2120, 3120, 4120) reaches the lower threshold value.

13. Method according to one of claims 9 to 12, further comprising:
closing the first switch element (6011, 7011) of the respective discharge unit (6000, 7000) while the second switch element (6012, 7012) of the respective discharge unit (6000, 7000) remains closed, when the predetermined event occurs;
opening the second switch element (6012, 7012) of the respective discharge unit (6000, 7000) while the first switch element (6011, 7011) of the respective discharge unit (6000, 7000) remains closed;
removing the sufficiently discharged battery unit (6500, 7500) while the first switch element (6011, 7011) of the respective discharge unit remains closed and the second switch element (6012, 7012) of the respective discharge unit (6000, 7000) remains open.

14. Method according to one of claims 9 to 13, further comprising:
connecting a new battery unit to be discharged (6600, 7600) to the respective discharge unit (6000, 7000) while the first switch element (6011, 7011) of the respective discharge unit remains closed and the second switch element (6012, 7012) of the respective discharge unit remains open;
closing the second switch element (6012, 7012) of the respective discharge unit (6000, 7000) while the first switch element (6011, 7011) of the respective discharge unit (6000, 7000) remains closed;
opening the first switch element (6011, 7011) of the respective discharge unit (6000, 7000) while the second switch element (6012, 7012) of the respective discharge unit (6000, 7000) remains closed, to discharge the battery unit to be discharged (6600, 7600), until the predetermined event occurs, which characterizes sufficient discharging of this battery unit (6600, 7600).

15. Method according to one of claims 9 to 14, wherein discharging the respective battery unit to be discharged (6500, 6600, 7500, 7600) until the predetermined event occurs comprises:
discharging the battery unit (6500, 6600, 7500, 7600) until a measured quantity of the battery unit (6500, 6600, 7500, 7600) reaches a predetermined threshold value, and, if the measured quantity reaches the threshold value, further discharging the battery unit (6500, 6600, 7500, 7600) until a predetermined charge amount is withdrawn from the battery unit (6500, 6600, 7500, 7600); and/or
discharging the battery unit (6500, 6600, 7500, 7600) until a voltage curve of the battery unit (6500, 6600, 7500, 7600) has a predetermined feature, in particular until the voltage curve reaches a constant or at least substantially constant, negative saturation voltage value.

## Revendications

1. Dispositif (1000, 2000, 3000, 4000, 5000) pour décharger des unités de batterie (1120, 2120, 3120, 4120, 5120), comprenant :
un agencement de commutateurs (1100, 2100, 3100, 4100, 5100) qui est agencé pour être connecté à une ou plusieurs unités de batterie (1120, 2120, 3120, 4120, 5120) et pour générer une connexion en série des unités de batterie connectées (1120, 2120, 3120, 4120, 5120), dans lequel l'agencement de commutateurs (1100, 2100, 3100, 4100, 5100) comprend deux connexions de tension continue (1140, 2140, 3140, 4140, 5140) pour fournir une tension continue (1020, 2020, 3020, 4020, 5020) ;
un circuit convertisseur (1500, 2500, 3500, 4500, 5500), en particulier une source et un puits de courant, qui est agencé pour convertir la tension continue (1020, 2020, 3020, 4020, 5020) fournie aux connexions de tension continue (1140, 2140, 3140, 4140, 5140) de l'agencement de commutateurs (1100, 2100, 3100, 4100, 5100) en une tension alternative ; et
des connexions de phase (1600, 2600, 3600, 4600, 5600) pour fournir la tension alternative générée par le circuit onduleur (1400, 2400, 3400, 4400, 5500) ;
**caractérisé en ce que**
l'agencement de commutateurs (5100) comprend au moins une unité de décharge (6000, 7000), dans lequel chacune de la au moins une unité de décharge (6000, 7000) est agencée pour être connectée à une unité de batterie (5120, 6500, 6600, 7500, 7600),
dans lequel chacune de la au moins une unité de décharge (6000, 7000) comprend un premier élément redresseur (6021, 7021), un premier élément de commutation (6011, 7011) et un deuxième élément de commutation (6012, 7012),
dans lequel l'élément redresseur premier respectif (6021, 7021) de l'unité de décharge respective (6000, 7000) est connecté en série avec le premier élément de commutation respectif (6011, 7011) de l'unité de décharge respective (6000, 7000), dans lequel chacune de la au moins une unité de décharge (6000, 7000) peut être connectée à une unité de batterie (5120, 6500, 6600, 7500, 7600) de sorte que la connexion en série du premier élément redresseur respectif (6021, 7021) et du premier élément de commutation respectif (6011, 7011) de l'unité de décharge respective (6000, 7000) est connectée en parallèle à l'unité de batterie respective (5120, 6500, 6600, 7500, 7600) et que le deuxième élément de commutation respectif (6022) de l'unité de décharge respective (6000, 7000) est connecté en série avec l'unité de batterie respective (5120, 6500, 6600, 7500, 7600).

2. Dispositif (1000, 2000, 3000, 4000) selon la revendication 1, dans lequel l'agencement de commutateurs (1100, 2100, 3100, 4100) comprend une pluralité d'unités de commutation (1110, 2110, 3110, 4110), dans lequel chaque unité de commutation (1110, 2110, 3110, 4110) de la pluralité d'unités de commutation peut être connectée à une unité de batterie (1120, 2120, 3120, 4120) de sorte qu'une connexion en série d'unités de batterie (1120, 2120, 3120, 4120) connectées aux unités de commutation individuelles (1110, 2110, 3110, 4110) est générée.

3. Dispositif (1000, 2000, 3000, 4000) selon la revendication 1 ou 2, dans lequel l'agencement de commutateurs (1100, 2100, 3100, 4100) comprend en outre une ou plusieurs des unités suivantes :
une unité de commutation principale (3190), qui est agencée pour connecter la pluralité d'unités de commutation (3110) aux connexions de tension continue (3140) ou pour les déconnecter de ces dernières ;
une unité d'inductance (2160, 3160, 4160), qui est connectée entre l'une des connexions de tension continue (2140, 3140, 4140) et la pluralité d'unités de commutation (2110, 3110, 4110) ;
au moins une unité à semi-conducteur (2150, 3150, 4150), dans lequel une unité à semi-conducteur respective (2150, 3150, 4150) est connectée en parallèle à une unité de batterie (2120, 3120, 4120) connectable à l'une des unités de commutation (2110, 3110, 4110) ;
au moins une unité de mesure de tension (1130, 2130, 3130, 4130), dans lequel une unité de mesure de tension respective (1130, 2130, 3130, 4130) est agencée pour mesurer la tension d'une unité de batterie (1120, 2120, 3120, 4120) connectable à l'une des unités de commutation (1110, 2110, 3110, 4110) ;
au moins une unité de contact (3180, 4180), dans lequel une unité de contact respective (3180, 4180) est agencée pour mettre en contact automatiquement l'une de la pluralité d'unités de commutation (3110, 4110) avec une unité de batterie (3120, 4120).

4. Dispositif (2000, 3000, 4000) selon l'une des revendications précédentes, comprenant en outre un condensateur (2170, 3170, 4170), qui est connecté entre les connexions de tension continue (2140, 3140, 4140) de l'agencement de commutateurs (2100, 3100, 4100).

5. Dispositif (1000, 2000, 3000, 4000, 5000) selon l'une des revendications précédentes, dans lequel le circuit convertisseur (1500, 2500, 3500, 4500, 5500) comprend un circuit convertisseur de tension continue (1200, 2200, 3200, 4200, 5200) et un circuit onduleur (1400, 2400, 3400, 4400, 5400),
dans lequel le circuit convertisseur de tension continue (1200, 2200, 3200, 4200, 5200) comprend au moins un circuit en demi-pont (1210, 2210, 3210, 4210) et est agencé pour convertir la tension continue (1020, 2020, 3020, 4020, 5020) fournie aux connexions de tension continue (1140, 2140, 3140, 4140, 5140) de l'agencement de commutateurs (1100, 2100, 3100, 4100, 5100) en une deuxième tension continue (1030, 2030, 3030, 4030) avec un niveau de tension plus élevé,
dans lequel le circuit onduleur (1400, 2400, 3400, 4400, 5400) comprend au moins un circuit en demi-pont (1410, 2410, 3410, 4410) et est agencé pour convertir la deuxième tension continue (1030, 2030, 3030, 4030) fournie par le circuit convertisseur de tension continue (1200, 2200, 3200, 4200, 5200) en la tension alternative.

6. Dispositif (1000, 2000) selon la revendication 5, dans lequel le circuit convertisseur (1500, 2500, 3500, 4500) comprend en outre une ou plusieurs des unités suivantes :
une unité de transformateur (1460, 2460, 3460, 4460), qui est connectée entre le au moins un circuit en demi-pont (1410, 2410, 3410, 4410) du circuit onduleur (1400, 2400, 3400, 4400) et les connexions de phase (1470, 2470, 3470, 4470) ; et/ou
un appareil de surveillance d'isolement (1310, 2310), qui est connecté entre le circuit convertisseur de tension continue (1200, 2200) et le circuit onduleur (1400, 2400) ; et/ou
au moins un condensateur (3320, 4320), en particulier au moins un condensateur Y, et/ou au moins une unité d'inductance (3330, 4330), chacun desquels est connecté entre le circuit convertisseur de tension continue (3200, 4200) et le circuit onduleur (3400, 4400) ; et/ou
au moins un condensateur (3455, 4455), en particulier au moins un condensateur Y, qui est connecté dans chaque cas dans une ligne de phase (3430, 4430) entre l'un des circuits en demi-pont (3410, 4410) du circuit onduleur (3400, 4400) et l'une des connexions de phase (3470, 4470), en particulier entre la ligne de phase respective (3430, 4430) et un conducteur de protection (3010, 4010).

7. Dispositif (5000) selon l'une des revendications précédentes, dans lequel chacune de la au moins une unité de décharge (6000) comprend un deuxième élément redresseur (6022), dans lequel le deuxième élément redresseur respectif (6022) de l'unité de décharge respective (6000) est connecté en série avec le deuxième élément de commutation respectif (6012) de l'unité de décharge respective (6000).

8. Dispositif selon l'une des revendications précédentes, dans lequel le premier élément de commutation respectif (6011, 7011) et le deuxième élément de commutation respectif (6012, 7012) de chacune de la au moins une unité de décharge (6000, 7000) peuvent être commandés pour décharger une unité de batterie (5120, 6500, 6600, 7500, 7600) connectée à l'unité de décharge respective (6000, 7000) ou pour la retirer ou l'échanger contre une nouvelle unité de batterie (5120, 6500, 6600, 7500, 7600).

9. Procédé pour décharger des batteries avec un dispositif (1000, 2000, 3000, 4000) selon l'une des revendications précédentes, comprenant les étapes :
connecter une ou plusieurs unités de batterie (1120, 2120, 3120, 4120) à l'agencement de commutateurs (1100, 2100, 3100, 4100) et générer une connexion en série des unités de batterie connectées (1120, 2120, 3120, 4120) ;
commander le circuit convertisseur (1500, 2500, 3500, 4500) de sorte que la tension continue (1020, 2020, 3020, 4020) fournie par l'agencement de commutateurs (1100, 2100, 3100, 4100) est convertie en une tension alternative ; et
fournir la tension alternative générée par le circuit convertisseur aux connexions de phase (1600, 2600, 3600, 4600) ;
comprenant en outre les étapes suivantes si une unité de batterie à décharger (6500, 6600, 7500, 7600) est connectée à l'une de la au moins une unité de décharge (6000, 7000) de l'agencement de commutateurs (5100) du dispositif (5000) :
ouvrir le premier élément de commutation (6011, 7011) et fermer le deuxième élément de commutation (6012, 7012) de l'unité de décharge respective (6000, 7000) pour décharger l'unité de batterie à décharger (6500, 7500), jusqu'à ce qu'un événement prédéterminé se produise, qui caractérise une décharge suffisante de l'unité de batterie (6500, 6600, 7500, 7600), en particulier une perte de la propriété de l'unité de batterie (6500, 6600, 7500, 7600) à stocker une charge.

10. Procédé selon la revendication 9, dans lequel la commande du circuit convertisseur (1500, 2500, 3500, 4500), en particulier le circuit convertisseur de tension continue (1200, 2200, 3200, 4200) et le circuit onduleur (1400, 2400, 3400, 4400), comprend :
effectuer une régulation de courant, en particulier de telle sorte qu'un courant constant est prélevé des unités de batterie (1120, 2120, 3120, 4120) connectées à l'agencement de commutateurs (1100, 2100, 3100, 4100).

11. Procédé selon la revendication 9 ou 10, comprenant en outre :
déconnecter l'une des unités de batterie connectées (1120, 2120, 3120, 4120) de l'agencement de commutateurs (1100, 2100, 3100, 4100) si une valeur de tension d'une tension aux bornes entre des connexions de borne de cette unité de batterie (1120, 2120, 3120, 4120) atteint une valeur de seuil inférieure,
dans lequel la valeur de seuil inférieure est en particulier 0 V ou une valeur de tension négative.

12. Procédé selon la revendication 11, comprenant en outre :
générer un court-circuit de l'une des unités de batterie connectées (1120, 2120, 3120, 4120) si une valeur de tension de cette unité de batterie (1120, 2120, 3120, 4120) atteint la valeur de seuil inférieure.

13. Procédé selon l'une des revendications 9 à 12, comprenant en outre :
fermer le premier élément de commutation (6011, 7011) de l'unité de décharge respective (6000, 7000) pendant que le deuxième élément de commutation (6012, 7012) de l'unité de décharge respective (6000, 7000) reste fermé, lorsque l'événement prédéterminé se produit ;
ouvrir le deuxième élément de commutation (6012, 7012) de l'unité de décharge respective (6000, 7000) pendant que le premier élément de commutation (6011, 7011) de l'unité de décharge respective (6000, 7000) reste fermé ;
retirer l'unité de batterie suffisamment déchargée (6500, 7500) pendant que le premier élément de commutation (6011, 7011) de l'unité de décharge respective reste fermé et que le deuxième élément de commutation (6012, 7012) de l'unité de décharge respective (6000, 7000) reste ouvert.

14. Procédé selon l'une des revendications 9 à 13, comprenant en outre :
connecter une nouvelle unité de batterie à décharger (6600, 7600) à l'unité de décharge respective (6000, 7000) pendant que le premier élément de commutation (6011, 7011) de l'unité de décharge respective reste fermé et que le deuxième élément de commutation (6012, 7012) de l'unité de décharge respective reste ouvert ;
fermer le deuxième élément de commutation (6012, 7012) de l'unité de décharge respective (6000, 7000) pendant que le premier élément de commutation (6011, 7011) de l'unité de décharge respective (6000, 7000) reste fermé ;
ouvrir le premier élément de commutation (6011, 7011) de l'unité de décharge respective (6000, 7000) pendant que le deuxième élément de commutation (6012, 7012) de l'unité de décharge respective (6000, 7000) reste fermé, pour décharger l'unité de batterie à décharger (6600, 7600), jusqu'à ce que l'événement prédéterminé se produise, qui caractérise une décharge suffisante de cette unité de batterie (6600, 7600).

15. Procédé selon l'une des revendications 9 à 14, dans lequel la décharge de l'unité de batterie respective à décharger (6500, 6600, 7500, 7600) jusqu'à ce que l'événement prédéterminé se produise comprend :
décharger l'unité de batterie (6500, 6600, 7500, 7600) jusqu'à ce qu'une grandeur de mesure de l'unité de batterie (6500, 6600, 7500, 7600) atteigne une valeur de seuil prédéterminée, et, si la grandeur de mesure atteint la valeur de seuil, décharger davantage l'unité de batterie (6500, 6600, 7500, 7600) jusqu'à ce qu'une quantité de charge prédéterminée soit retirée de l'unité de batterie (6500, 6600, 7500, 7600) ; et/ou
décharger l'unité de batterie (6500, 6600, 7500, 7600) jusqu'à ce qu'une courbe de tension de l'unité de batterie (6500, 6600, 7500, 7600) présente une caractéristique prédéterminée, en particulier jusqu'à ce que la courbe de tension atteigne une valeur de tension de saturation négative constante ou au moins sensiblement constante.
